(19) Europäisches Patentamt
European Patent Office
Office européen des brevets

(11) **EP 3 911 982 B1**

(12) **EUROPEAN PATENT SPECIFICATION**

(45) Date of publication and mention
of the grant of the patent:
**05.07.2023 Bulletin 2023/27**

(21) Application number: **19910515.6**

(22) Date of filing: **20.01.2019**

(51) International Patent Classification (IPC):
**G02B 6/10** *(2006.01)*    **G01M 11/02** *(2006.01)*

(52) Cooperative Patent Classification (CPC):
**G02B 27/62; G02B 7/003**

(86) International application number:
**PCT/IB2019/050464**

(87) International publication number:
**WO 2020/148574 (23.07.2020 Gazette 2020/30)**

(54) **OPTICAL DEVICE TESTING METHOD AND APPARATUS**

VERFAHREN UND VORRICHTUNG ZUR PRÜFUNG EINER OPTISCHEN VORRICHTUNG

PROCÉDÉ ET APPAREIL D'ESSAI DE DISPOSITIF OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.11.2021 Bulletin 2021/47**

(73) Proprietor: **Lumus Ltd.**
**7403631 Ness Ziona (IL)**

(72) Inventors:
• **LOBACHINSKY, Lilya**
**6423412 Tel Aviv (IL)**
• **DANZIGER, Yochay**
**2514700 Kfar Vradim (IL)**
• **LIVNEH, Nitzan**
**Mevasseret Zion (IL)**

(74) Representative: **Kancelaria Eupatent.pl Sp. z.o.o**
**Ul. Kilinskiego 185**
**90-348 Lodz (PL)**

(56) References cited:
**WO-A1-2016/174843    WO-A1-2018/127913**
**US-A1- 2014 340 286    US-A1- 2017 169 747**

• **WEI CHEN ET AL: "79-2: An Image Quality Evaluation Method of Near-eye Display", SID SYMPOSIUM DIGEST OF TECHNICAL PAPERS, vol. 47, no. 1, 1 May 2016 (2016-05-01), pages 1060-1063, XP055441041, US ISSN: 0097-966X, DOI: 10.1002/sdtp.10935**

EP 3 911 982 B1

**Description**

FIELD OF THE INVENTION

The present invention generally relates to optical testing, and in particular, it concerns testing optical devices.

BACKGROUND OF THE INVENTION

During the process of integration of an optical engine (optical element, "OE") in to various systems (for example, for augmented reality "AR" near eye display) there is a need to evaluate performance of the OE at both the component level and the integrated unit level. Specifically, because systems (such as AR) combine and transmit real and synthetic images into an observer's eyes, there is a need for specialized testing of smears, white lines, jumps, and black lines (gaps, areas of less intensity).

SUMMARY

According to the teachings of the present embodiment there is provided a method for testing an optical device as defined in claim 1.

In an optional embodiment, further including: projecting a collimated image of a test pattern into the lightguide via the coupling-in configuration, the lightguide including: at least one set of facets, each of the sets: including a plurality of partially reflecting facets parallel to each other, between the first pair of external surfaces, and at an oblique angle relative to the first pair of external surfaces , and the capturing an image being of an image projected from the lightguide.

In an optional embodiment, the lightguide includes a set of three optical components, said set including: a pair of first and second matching diffractive optical components; and a reflective optical component including a sequence of a plurality of partially reflective, mutually parallel surfaces; and said components cooperating for expanding coupled-in light to coupled-out light, said coupled-in light being light coupled into said at least one lightguide, and said expanding being two-dimensional.

In another optional embodiment, a first optical component of said set is configured for directing said coupled-in light in a first direction of expansion within a first lightguide, thereby generating first expanded light; a second optical component of said set is configured for coupling said first expanded light into a second lightguide in a second direction of expansion, thereby generating second expanded light; and a third optical component of said set configured for out-coupling said second expanded light in a third direction as said coupled-out light; wherein said first, second and third directions are non-parallel to each other.

In another optional embodiment, further including: a non-diffractive optical component configured to direct light into said at least one lightguide as said coupled-in light; wherein said at least one lightguide is one lightguide including: said first diffractive optical component configured for directing said coupled-in light in a first direction of expansion within said one lightguide, thereby generating first expanded light; said second diffractive optical component configured for expanding said first expanded light in said one lightguide in a second direction of expansion, thereby generating second expanded light; and said reflective optical component configured for out-coupling said second expanded light in a third direction as said coupled-out light; wherein said first, second and third directions are non-parallel to each other.

The invention further includes : defining at least one region of interest in each of a plurality of the captured images, each the captured image: including a test pattern captured from the output light of the optical device, the output light generated by projecting a collimated image of the test pattern into the optical device, and captured at a different location within an active area of the optical device, relative to the optical device, the active area used by a user for viewing the output light, each region of interest including a portion of the test pattern, extracting a plurality of cross-sections from each of the at least one region of interest, wherein each of the plurality of cross-sections includes an area of the portion of the test pattern, thereby forming a corresponding set of cross-sections for each region of interest for each portion of the test pattern, and for each portion of the test pattern, comparing the corresponding sets of cross-sections to determine a metric for the optical device. Wherein a location of each cross-section of the set of cross-sections is known relative to other locations of other cross-sections of the set of cross-sections

In another example, not falling under the scope of the invention, further including defining, in the captured image , one or more additional fields, the captured image captured from output light of the optical device, the output light generated by projecting a collimated image of a test pattern into the optical device , and the optical device having: a first pair of external surfaces parallel to each other, and at least one set of facets , each of the set of facets: including a plurality of partially reflecting facets parallel to each other and at an oblique angle relative to the first pair of external surfaces, and between the first pair of external surfaces, and a direction of propagation: of the collimated image via the set of facets, internal to the optical device, and parallel to the first pair of external surfaces, each of the additional fields: being in an associated location within the captured image , the associated location being parallel to the direction of propagation, and having an associated brightness level, and deriving a metric based on at least one of the associated brightness levels.

In another comparative example, not falling under the scope of the invention, further including defining, in the captured image, one or more fields, the captured image captured from output light of an optical system, the optical system including: an optical device configured to propagate an input image and couple out the input image as the output light, an input coupling section configured for coupling the input image into the optical device , and a coupling interface being a location of an edge of an area at which the input coupling section is joined to the optical device, the output light generated by projecting a collimated image of a test pattern via the input coupling section into the optical device, and each of the one or more fields: being in an associated location within the captured image, the associated location being parallel to the coupling interface and deriving a metric based on at least one of the fields.

According to the teachings of the present embodiment there is provided a method for testing an optical device, the method including the steps of: defining at least one region of interest in each of a plurality of captured images, each the captured image: including a test pattern, captured from the output light of the optical device, the output light generated by projecting a collimated image of the test pattern into the optical device, and captured at a different location within an active area of the optical device, relative to the optical device, the active area used by a user for viewing the output light, each region of interest including a portion of the test pattern, extracting a plurality of cross-sections from each of the at least one region of interest, wherein each of the plurality of cross-sections includes an area of the portion of the test pattern, thereby forming a corresponding set of cross-sections for each region of interest for each portion of the test pattern, and for each portion of the test pattern, comparing the corresponding sets of cross-sections to determine a metric for the optical device.

In an optional embodiment, further including the step of: projecting a collimated image of the test pattern into a lightguide optical element (LOE) and capturing a plurality of images projected from the LOE to generate the plurality of captured images, the capturing of each image at a different the location relative to the optical device.

In another optional embodiment, wherein the capturing is by a camera moving orthogonal to an output surface of the LOE, the moving being within the active area that is used by a user for viewing the output light projected from the LOE.

In another optional embodiment, wherein the LOE includes an array of partially reflecting surfaces, each surface separated from an adjacent surface by a facet-spacing distance, the camera having an aperture set at the facet-spacing.

According to the invention, the at least one region of interest includes a first region of interest orthogonal to a second region of interest.

According to the invention, the test pattern is a cross-hair, the first region of interest is of a vertical potion of the cross-hair and the second region of interest is of a horizontal portion of the cross-hair.

In another optional embodiment, wherein for each region of interest the plurality of cross-sections is sequential in a direction from an origin of the test pattern to a point on an edge of the test pattern.

In another optional embodiment, wherein for each region of interest the plurality of cross sections are averaged with each other to generate a single averaged cross-section.

In another optional embodiment, wherein the metric is based on the location relative to the optical device. In another optional embodiment, wherein the metric is calculated from the cross-sections using a technique selected from the group consisting of:

(a) full width at half maximum (FWHM),
(b) mean peak width,
(c) standard deviation of peak width,
(d) first derivative of peaks widths,
(e) second derivative of peaks widths,
(f) largest peak width,
(g) max peak shift from expected location,
(h) standard deviation of peak shift,
(i) mean modulation transfer function at Nyquist frequency,
(j) mean modulation transfer function at a frequency other than Nyquist frequency,
(k) standard deviation of transfer function at Nyquist frequency, and
(l) standard deviation of transfer function at a frequency other than Nyquist frequency.

According to the teachings of a comparative example not falling under the scope of the claims there is provided a method for testing, the method including the steps of: defining, in a captured image , one or more additional fields, the captured image captured from output light of an optical device, the output light generated by projecting a collimated image of a test pattern into the optical device, and the optical device having: a first pair of external surfaces (926, 926A) parallel to each other, and at least one set of facets, each of the set of facets: including a plurality of partially reflecting facets parallel to each other and at an oblique angle relative to the first pair of external surfaces, and between the first pair of external surfaces (926, 926A), and a direction of propagation: of the collimated image via the set of facets, internal to the optical device, and parallel to the first pair of external surfaces, each of the additional fields: being in an associated location within the captured image, the associated location being parallel to the direction of propagation, and having an associated brightness level, and deriving a metric based on at least one of the associated brightness levels.

In an optional embodiment, further including the step of: projecting a collimated image of the test pattern into the optical device, the optical device being a lightguide optical element and capturing an image projected from the LOE to provide the captured image.

In another optional embodiment, wherein the capturing is by a camera at a first of a plurality of capture locations, the plurality of capture locations at an eye relief distance from the LOE and in an eye motion box of the LOE.

In another optional embodiment, wherein the capturing is repeated at one or more of the capture locations, other than the first capture location, and one or more additional metrics are derived based on the capture locations.

In comparative example not falling under the scope of the claims further including defining, in a captured image, a first field, the first field: having a first brightness level, and being in a first location within the captured image, the first location other than the associated locations, wherein the metric is derived at least in part by comparing the first brightness level to one or more associated brightness levels.

In another comparative example, wherein the first field is a white square and the additional fields are portions of a black background surrounding the first field.

In another comparative example, wherein the first field is central to the captured image and the additional fields are adjacent to each other from the first field to left and right edges of the captured image.

In another comparative example, wherein each the associated brightness level is less than the first brightness level.

In another comparative example, wherein the first brightness level is at least substantially 100 times brighter than each the associated level.

In another comparative example, further including the step of: prior to the step of comparing, normalizing intensity of the captured image.

In another comparative example, wherein the first field includes a first area of the captured image, and the step of normalizing includes: projecting a collimated image of a second test pattern having substantially entirely the first brightness level, capturing a second captured image from the output light generated by the second test pattern, and determining a white-intensity using a technique selected from the group consisting of: measuring the average intensity of the first area in the second captured image, and measuring intensity of the second captured image, normalizing the captured image using the white intensity.

In another comparative example, wherein the step of normalizing further includes:
projecting a collimated image of a third test pattern having substantially entirely one of the associated brightness levels, capturing a third captured image from the output light generated by the third test pattern, and determining a black-intensity by measuring intensity of the third captured image, normalizing the captured using differences between the white intensity and the black intensity.

In another comparative example, wherein the metric is determined using a technique selected from the group consisting of: comparing at least one the associated brightness level to at least one previously determined brightness level, summing the associated brightness levels, and comparing a second additional field's associated brightness level to two brightness levels each of additional fields adjacent to the second additional field and opposite each other.

In another comparative example, wherein a first and second of the additional fields are each adjacent to the first field.

In another comparative example, wherein the captured image is monochromatic and the brightness levels are a gray levels.

According to the teachings of a comparative example not falling under the scope of the claims, there is provided a method for testing, the method including the steps of: defining, in a captured image, one or more fields, the captured image captured from output light of an optical system, the optical system including: an optical device configured to propagate an input image and couple out the input image as the output light, an input coupling section configured for coupling the input image into the optical device, and a coupling interface being a location of an edge of an area at which the input coupling section is joined to the optical device, the output light generated by projecting a collimated image of a test pattern via the input coupling section into the optical device, and each of the one or more fields: being in an associated location within the captured image, the associated location being parallel to the coupling interface and deriving a metric based on at least one of the fields.

In a comparative example, further including the step of: projecting a collimated image of the test pattern into the optical system, the optical system being a lightguide optical element and capturing an image projected by the output light from the LOE to provide the captured image.

In another comparative example, wherein the capturing is by a camera at a first of a plurality of capture locations, the plurality of capture locations at an eye relief distance from the LOE and in an eye motion box of the LOE.

In another comparative example, wherein the capturing is repeated at one or more of the capture locations, other than the first capture location, and one or more additional metrics are derived based on the capture locations.

In another comparative example, wherein the test pattern includes a first area having a first brightness level greater than a background brightness level of a background area, the background area being an area of the test pattern other than the first area.

In another comparative example, wherein the first area is white, the background area is black surrounding the first area, and the one or more fields are defined in the background area.

In another comparative example, wherein the first brightness level is at least substantially 200 times brighter than the background brightness level.

In another comparative example, further including the step of: prior to the step of deriving, normalizing intensity of the captured image.

In another comparative example, wherein the metric is determined using a technique selected from the group consisting of: comparing brightness levels within the one or more fields to at least one previously determined brightness level, summing brightness levels within the one or more fields, and comparing a first brightness level to at least one other brightness level within the one or more fields.

In another comparative example, wherein the captured image is monochromatic and brightness levels are gray levels.

In another comparative example, wherein the captured image has a high dynamic range of brightness levels.

According to the teachings of the present embodiment there is provided a non-transitory computer-readable storage medium having embedded thereon computer-readable code for testing an optical device, the computer-readable code including program code for the steps of this description.

BRIEF DESCRIPTION OF FIGURES

The embodiment is herein described, by way of example only, with reference to the accompanying drawings, wherein:

FIG. 1, there is shown a side view of an exemplary lightguide optical element (LOE).
FIG. 2, there is shown a basic, common test setup system.
FIG. 3A, there is shown a flowchart for optical testing along a specific axis.
FIG. 3B, there is shown a test setup system for the testing method of the current embodiment.
FIG. 4A, there is shown a plurality of captured images.
FIG. 4B, there is shown regions of interest.
FIG. 4C, there is shown extraction of cross sections from regions of interest.
FIG. 5, there is shown scans of cross-sections and derived metrics
FIG. 6, there is shown a flowchart for optical testing of smearing.
FIG. 7, there is shown an exemplary test setup system for the testing method of a comparative example, not falling under the scope of the invention.
FIG. 8, there is shown a captured image of output from an optical device showing a white square main image on a black background.
FIG. 9, there is shown the captured image with fields defined.
FIG. 10, there is shown a chart of the 39 fields **F0** to **F38** position, size, and brightness intensity.
FIG. 11, there is shown alternative patterns.
FIG. 12A, there is shown an exemplary single stripe test pattern.
FIG. 12B, there is shown a checkerboard test pattern.
FIG. 13A, there is shown a single stripe captured image.
FIG. 13B, there is shown a checkerboard captured image.
FIG. 14, there is shown a cross-section plot that could be generated from the single stripe captured image.
FIG. 15, there is shown a plot of a first derivative of the brightness.
FIG. 16, there is shown a plot of a second derivative of the brightness.
FIG. 17, there are shown several exemplary test patterns.
FIG. 18, there is shown an exemplary process for normalizing the captured image matrix.
FIG. 19 there is shown a flowchart of an exemplary processing method for detecting WS.

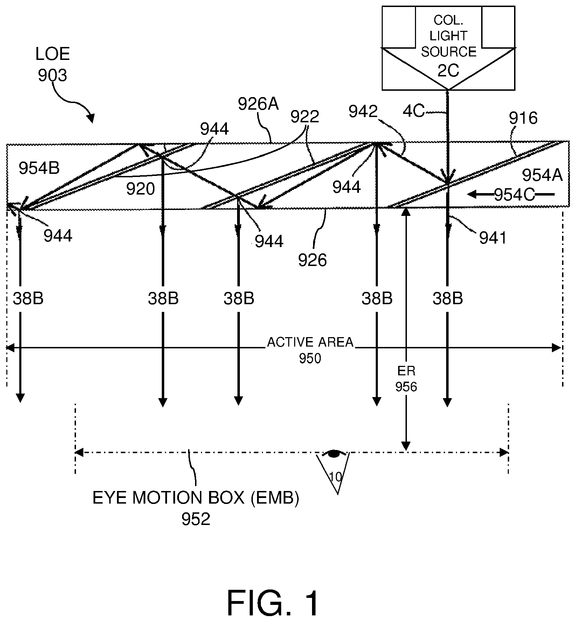

DETAILED DESCRIPTION - FIG. 1 TO FIG. 19

The principles and operation of the system and method according to a present embodiment may be better understood with reference to the drawings and the accompanying description. A present invention is a system and method for optical testing along a specific axis for evaluation of LOE transfer function uniformity across facet's active area. According to examples not falling under the scope of the invention, the existence and degree of "smearing" of a projected image from an optical device can be detected, where "smearing" generally refers to the generation and propagation of other than the primary light rays of an image, resulting in a projection of an image outline to a well-defined direction. According to embodiments not falling under the scope of the invention, the existence and degree of a "white stripes" (WS) phenomenon related to scattering and diffraction in the wedge-to-LOE interface can be detected.

BASIC TECHNOLOGY - FIG. 1

Referring to FIG. 1, there is shown a side view of an exemplary lightguide optical element (LOE) **903**. The current figure is not drawn to scale. A collimated light source **2C** emanates a collimated input beam **4C**. In the context of this document, light sources are also referred to as "projectors." Light sources can be lasers or an LED that transmits a single or plurality of wavelengths. The light has a plurality of angular propagation directions that are oriented around the axis of the transmission, such as in a lightguide. For simplicity in the current figures, generally only the center direction of propagation is depicted for clarity. Only one light ray is generally depicted, the incoming light ray, the input beam (for example the collimated input beam **4C**), also referred to as the "beam" or the "incoming ray". Generally, wherever an image is represented herein by a light beam, it should be noted that the beam is a sample beam of the image, which typically is formed by multiple beams at slightly differing angles each corresponding to a point or pixel of the image. Except where specifically referred to as an extremity of the image, the beams illustrated are typically a centroid of the image. That is, the light corresponds to an image and the central ray is a center ray from a center of the image or a central pixel of the image.

A first reflecting surface **916** is illuminated by the collimated input beam **4C**. A first region **954A** (proximal end) is proximal to the collimated input beam **4C** where an image illumination (input image) is coupled into a lightguide **920**. The reflecting surface **916** at least partially reflects the incident light of the collimated input beam **4C** from the collimated light source **2C** such that the light is trapped inside the lightguide **920** by internal reflection, typically total internal reflection (TIR). The lightguide **920** is typically a transparent substrate, and is also referred to as a "planar substrate", "light-transmitting substrate", and "waveguide". The lightguide **920** includes at least two (major, external) surfaces, typically parallel to each other (mutually parallel), shown in the current figure as a first (back, major) surface **926** and a front (second, major) surface **926A**. Note that the designation of "front" and "back" with regard to the major surfaces (**926**, **926A**) is for convenience of reference. Coupling-in to the lightguide **920** can be from various surfaces, such as the front, back, side edge, or any other desired coupling-in geometry.

The collimated input beam **4C** enters the lightguide substrate at a proximal end of the substrate (right side of the figure). Light propagates **954C** through the lightguide **920** from the first region **954A** through one or more facets, normally at least a plurality of facets, and typically several facets, toward a distal end **954B** of the lightguide **920** (left side of the figure). The lightguide **920** typically guides rays of propagating light in the substrate by internal reflection of the external surfaces.

After optionally reflecting off the internal surfaces of the substrate **920**, the trapped waves reach a set (array) of selectively reflecting (partially reflecting) surfaces (facets) **922**, which couple the light out of the substrate into the eye **10** of a viewer. In the current exemplary figure, the trapped ray is gradually coupled out from the substrate **920** by two other partially reflecting surfaces **922** at the points **944**, each of the facets coupling out a portion of the propagating light. Several exemplary coupled-out rays are shown as out-coupling rays **38B**. The out-coupled rays **38B** define an active area **950** on the surface of the LOE **903** where the input image of the collimated input beam **4C** is output as an output image. A field of view (FOV) (not shown) for the viewer's eye **10** defines an angular range seen by a user's eye. A specific distance of the user's eye **10** from the LOE **903** (for example 18mm) is referred to as an eye relief (ER) distance **956**. An eye motion box (EMB) **952** is an area (two-dimensional) via which the viewer's eye **10** has a full FOV of the active area **950** projecting the entire input image coupled into the LOE **903**, when the user's eye **10** is at the eye relief distance **956**. In other words, the EMB **952** is a two-dimensional (2D) area at the ER distance **956**, at which the user's eye **10** captures the entire image (full FOV) projected by the LOE **903**. Internal, partially reflecting surfaces, such as the set of selectively reflecting surfaces **922** are generally referred to in the context of this document as "facets." For applications such as augmented reality, the facets are partially reflecting, allowing light from the real world to enter via the front surface **926A**, traverse the substrate including facets, and exit the substrate via the back surface **926** to the eye **10** of the viewer. Exemplary ray **942** shows light of the collimated input beam **4C** partially reflected from reflecting surface **916**, and exemplary ray **941** shows light of the collimated input beam **4C** partially transmitted through reflecting surface **916**.

The internal partially reflecting surfaces **922** generally at least partially traverse the lightguide **920** at an oblique angle (i.e., non-parallel, neither parallel nor perpendicular) to the direction of elongation of the lightguide **920**. Partial reflection can be implemented by a variety of techniques, including, but not limited to transmission of a percentage of light, or use of polarization.

The lightguide **920** optionally has a second pair of external surfaces (not shown in the current figure side view) parallel to each other and non-parallel to the first pair of external surfaces. In some implementations, the second pair of external surfaces is perpendicular to the first pair of external surfaces. Typically, each of the facets is at an oblique angle to the second pair of external surfaces. In other cases, where reflections from peripheral surfaces of the lightguide are not desired, the peripheral surfaces are typically left unpolished and/or coated with light absorbent (e.g., black) material to minimize undesired reflections.

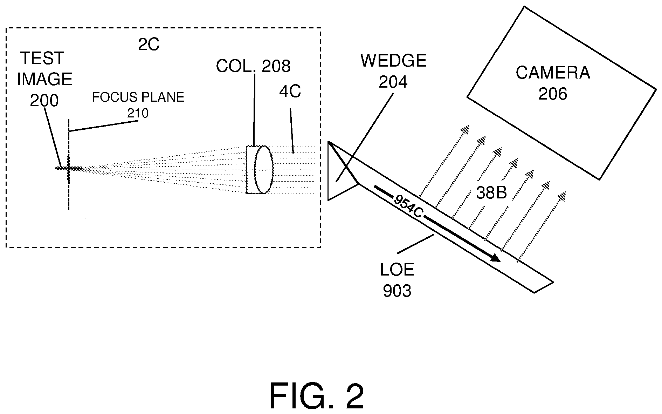

DESCRIPTION - TEST SETUP - FIG. 2

Referring to FIG. 2, there is shown a basic, common test setup system that can be used for the below-described optical testing. In the current figure, the collimated light source **2C** is implemented by a first exemplary light source system **202C** that includes a projected test pattern **200,** in this case a reticle (reticule) in the shape of a "cross-hair" at a focus plane **210.** The test pattern **200** is projected via a collimator **208** to produce collimated input beam **4C.** The collimated input beam **4C** is input via a wedge **204** to the LOE **903** where the image propagates **954C** through the LOE **903** and is coupled out by the array of selectively facets **922** (not shown) as the out-coupling rays **38B** toward a camera **206.**
A typical implementation is described wherein the LOE **903** includes the array of selectively facets **922,** however, this is not limiting. The LOE **903** can alternatively include a single facet, or a different combination of facets that are not parallel to one another. One alternative implementation is to use in place of the LOE **903** a lightguide using and/or combining facet reflective technology (reflective components) and diffractive technology (diffractive components), such as disclosed in PCT/IL2018/050205 to Lumus LTD. Embodiments with diffractive components use at least two components having opposite optical power (matching), so that chromatic dispersion introduced by a first diffractive component will then be cancelled by a second diffractive component. The two diffractive components can be used in combination with a reflective optical component to achieve aperture expansion (for near eye display).
The use of the wedge **204** is a non-limiting example of an input coupling section, and other devices and configuration can be used to couple the image into the LOE **903.** Similarly, the camera **206** is a non-limiting example of a typical implementation, and various configurations of image capture devices can be used to implement the requirements for specific applications and testing.
In addition, the hardware setup for testing should be in a clean room of an appropriate level, and external light should be managed, such as ambient room light and blocking light from entering the LOE **903** from other directions (other than the desired in-coupled test beam) such as blocking light from entering the back side of the LOE **903.**

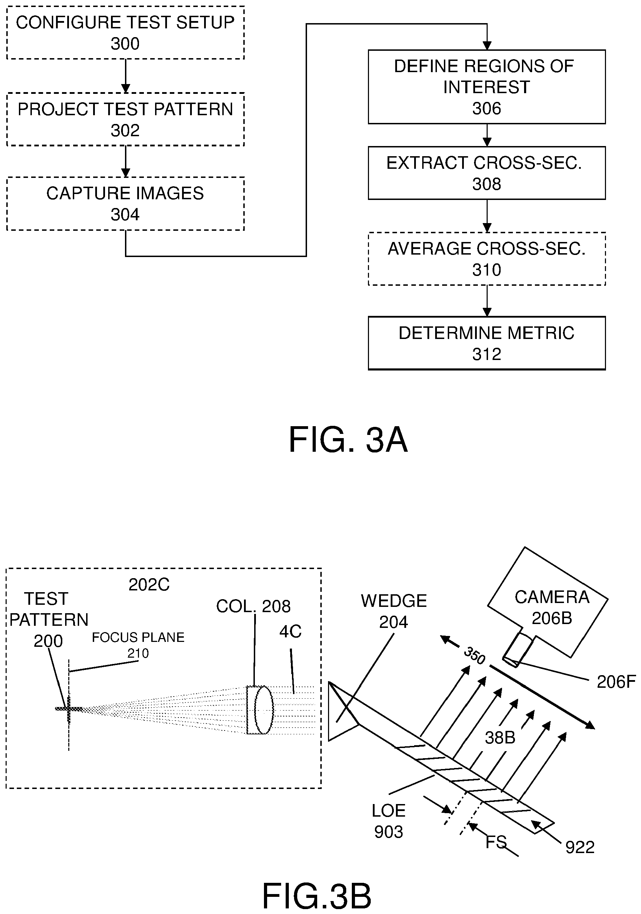

DESCRIPTION - FIRST EMBODIMENT - FIG. 3A TO FIG. 5

The principles and operation of the system and method according to a present embodiment may be better understood with reference to the drawings and the accompanying description. A present invention is a system and method for optical testing along a specific axis for evaluation of LOE transfer function uniformity across facet's active area.
In this description, the non-limiting examples of an augmented reality (AR) application implemented with an LOE (lightguide optical element) **903,** using a test pattern in the shape of a "cross-hair" are used for simplicity.
In an LOE **903** based augmented reality optical engine, there is symmetry breaking between the horizontal and vertical directions in the optical design, resulting in a need for specialized testing along a specific axis. In particular, an axis in the direction (**954C**) of the array of facets **922** in the light-transmitting substrate **920.** In a case of a component level test system for the LOE **903,** the optical performance of the LOE needs to be uniform across the facet's (or LOE's) active area **950.**
Referring to FIG. 3A, there is shown a flowchart for optical testing along a specific axis. In step **300,** a test setup is configured as described in the following section.
Referring also to FIG. 3B, there is shown a test setup system for the testing method of the current embodiment. The evaluation of the LOE transfer function uniformity across the facet's **922** active area **950** requires a specialized test setup that injects a test signal. An exemplary test signal is a wavefront (spatial impulse function) into the LOE **903** via the entrance aperture.
In step **302,** a test pattern is projected. One technique for achieving this in practice is by projection of the test pattern **200** (for example, a cross, or cross-hair pattern) from a collimator (autocollimator) through the wedge **204** (perpendicularly) which is then repeatedly reflected by the facets **922** of the LOE **903.** The input from the collimator can be in various directions relative to the input coupling wedge. For example, 90 degrees (the test pattern is input perpendicular to the surface of the wedge **204**) will test the center of observer's field of view but off-angle (other than 90 degrees, for example 30 degrees from normal to the wedge surface) inputs can be used to test other angles of propagation through the LOE **903** corresponding to different points in the observer's field of view.
In step **304,** images are captured. In order to evaluate the LOE transfer function across the facet's active area (along both horizontal and vertical axes), a camera **206B** positioned opposite the LOE **903** scans the projected image from the LOE and the image data of the cross-hair (test pattern) is digitized as a function of position. The camera **206B** has an aperture **206F.** A distance between adjacent facets is defined as a facet spacing (**FS**) distance. The scan can be done, and the images captured in a variety of patterns, as long as the processing knows the position of each captured image so the images can be processed correctly, in particular with relation to each other. After an initial scan and capturing of images, the scan can be repeated in full or partially to capture images at a different spacing and/or locations, for example, to do a finer scan between two particular facets. Typically, the camera **206B** moves orthogonally to the facets **922** (as shown by arrow **350**), capturing many images (a plurality of images) as the camera **206B** moves across the array of facets **922.**

A preferable, non-limiting implementation is to use a camera aperture that matches the facet spacing. For example, if the facet spacing (**FS**) is 3 mm (millimeter), then the camera aperture can be set for 3 mm. If the camera aperture is greater or less than the facet spacing FS, then on skilled in the art will need to adjust this procedure accordingly. Images are captured at known intervals, for example, every 1 (one) mm or every 0.5 mm. Decreased intervals can be used for higher resolution. In general, the camera aperture **206F** should be large enough to receive cross images from two adjacent facets, but not from three adjacent facets. A jump in location of the test pattern can indicate unparallel facets. A standard round aperture can be used. Other requirements for specific applications may use a more complicated shaped aperture. The camera **206B** is preferably positioned so the test pattern (cross-hair) appears in the center of the captured image. This fixes the correct angle with respect to the LOE **903.** Regarding the translation alignment, the camera **206B** is placed more or less in front of the center of the LOE **903.** The test is not sensitive to the exact location of the camera **206B** with respect to the LOE **903.**

The depth and resolution of the captured image, that is, the number of bits per pixel and number of pixels should be appropriate for the desired testing accuracy and precision. For example, 8-bits gray-scale (monochromatic camera) is generally sufficient for the current level of testing. The lens and pixel size are preferably such that the width of the imaged test pattern (for a specific slit size and autocollimator lens) will be at least several pixels.

As the input to the LOE **903** is a collimated image of a test pattern (the collimated input beam **4C**), the output from the LOE (out-coupling rays **38B**) at each location in the active area **950** of the LOE **903** is going to be the collimated image of the test pattern. Testing is for nonuniformities in the output collimated image of the test pattern from the LOE. Each pixel of the test pattern **200** corresponds to an angle in space, as the test pattern appears to be coming from infinity at each point in the active area **950** of the output of the LOE.

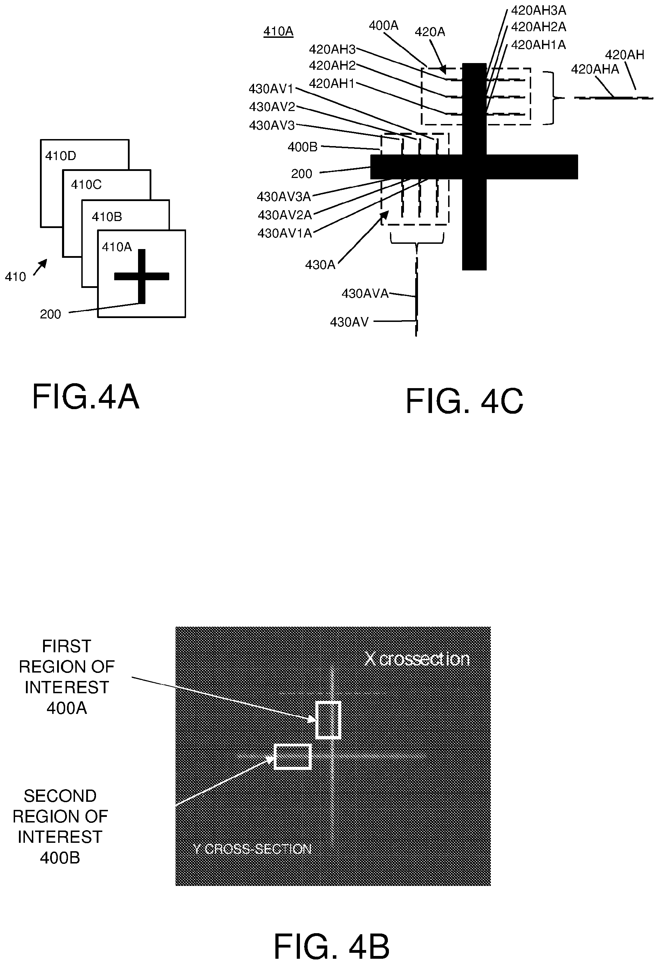

Referring to FIG. 4A there is shown a plurality of captured images. Exemplary captured images **410,** including four images **410A, 410B, 410C,** and **410D.** Each captured image includes the projected test pattern **200,** and each captured image has a location relative to the optical device being tested (in this case LOE **903**).

Referring to FIG. 4B there is shown regions of interest. In step **306,** in each image **410,** there is defined at least one region of interest (ROI) that will be used for analysis. The at least one region of interest includes a first region of interest orthogonal to a second region of interest. In the current figure, the region of interest is shown as exemplary first ROI **400A** and second ROI **400B.** Each ROI includes a portion of the test pattern **200.** The test pattern **200** is a cross-hair, the first ROI 400A is of a vertical potion of the cross-hair and the second ROI **400B** is of a horizontal portion of the cross-hair. Each ROI refers to an area originating in the focus plane **210** of the test pattern **200.** Each axis of the cross-hair test pattern **200** can provide different information. The cross-hair vertical line can be used for reference, since the vertical line will not suffer from jumps caused by the facets. The cross-hair horizontal cross line will suffer from broadening due to unparallel facets.

Referring to FIG. 4C, there is shown extraction of cross sections from regions of interest. In step **308,** in overview, a plurality of cross-sections are extracted from each of the at least one region of interest. Each of the plurality of cross-sections includes a portion of the test pattern, thereby forming a corresponding set of cross-sections for each region of interest for each portion of the test pattern. A location of each cross-section of the set of cross-sections is known relative to other locations of other cross-sections of the set of cross-sections. In one implementation, in each region of interest the plurality of cross-sections are sequential in a direction from an origin of the test pattern to a point on an edge of the test pattern.

In the context of this embodiment, the term "cross-section" generally refers to extracting or measuring a one-dimensional trace of intensity from the two-dimensional (2D) image of the test pattern. The cross-section is an intensity trace measuring intensity of captured light along a line segment, the line segment including a sub-segment of the intensity of a portion of the test pattern. Thus, the intensity trace shows variation of intensity, giving a linear intensity profile of a subsection (sub-image) of the captured image.

Now in more detail, for each of the captured images **410,** digitized cross-sections are grabbed (extracted from) within one or more regions of interest. Captured image **410A** is used in the current figure and will be used for clarity in the following description. For example the first ROI **400A** includes exemplary horizontal cross sections **420A** (also referred to in this document as "X cross-section", including **420AH1, 420AH2,** and **420AH3**). The second ROI **400B** includes exemplary vertical cross sections **430A** (also referred to in this document as "Y cross-section", including **430AV1, 430AV2,** and **430AV3**). Each of the plurality of cross-sections includes an area of the portion of the test pattern **200.** In this case, cross-section **420AH3** includes area **420AH3A** of test pattern **200.** Similarly, cross-section **420AH2** includes **420AH2A,** cross-section **420AH3** includes **420AH3A,** cross-section **430AV1** includes **430AV1A,** cross-section **430AV2** includes **430AV2A,** and cross-section **430AV3** includes **430AV3A.**

Exemplary cross sections **420AH1, 420AH2,** and **420AH3** form a corresponding set **420A** of cross-sections for ROI **400A** of the test pattern **200.** Similarly, exemplary cross sections **430AV1, 430AV2,** and **430AV3** form a corresponding set **430A** of cross-sections for ROI **400B** of the test pattern **200.**

In step **310,** optionally the sets of cross-sections can be averaged. To allow a better signal to noise ratio, (within each ROI) each set of these cross-sections are projected or averaged with each other to form a single X-cross-section and a single Y-cross-section for each image. In the current example, the set **420A** of cross-sections are averaged to generate an averaged horizontal cross-section **420AH** with (averaged) area **420AHA.** Similarly, the set **430A** of cross-sections are averaged to generate an averaged vertical cross-section **420AV** with (averaged) area **420AVA.**

Based on the above description, if we would consider the captured image **410B,** a similar set of cross-sections could be extracted (not shown). For example, from the captured image **410B** a first ROI **400A** and second ROI **400B** are defined, corresponding to the same regions of interest in captured image **410A.** A set of X-cross-sections **420B** could include several exemplary cross-sections **420BH1, 420BH2,** and **420BH3** used to produce averaged cross-section **420BH,** while a set of Y-cross-sections **430B** could include exemplary cross-sections **430BV1, 430BV2,** and **430BV3** and used to produce averaged cross-section **430BV.**

Similarly, the captured image **410C** can be processed to produce from the first ROI **400A** averaged cross-section **420CH,** and from the second ROI **400B** averaged cross-section **430CV.**

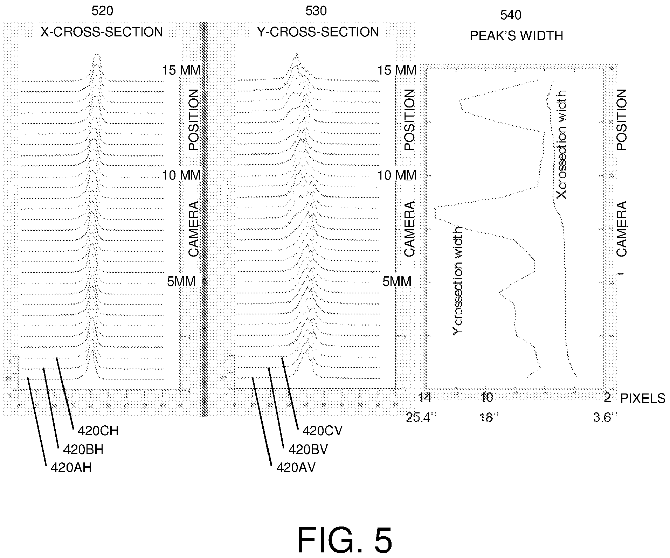

Referring now to FIG. 5, there is shown scans of cross-sections and derived metrics. X-cross-section scan **520** shows a scan of averaged cross-sections as a function of camera position. Exemplary average cross-sections **420AH, 420BH, 420CH** are stacked vertically in the scan with the vertical axis of the scan being camera position in millimeters (mm). Similarly, Y-cross-section scan **530** shows a scan of averaged cross-sections as a function of camera position. Exemplary average cross-sections **420AV, 420BV, 420CV** are stacked vertically in the scan with the vertical axis of the scan being camera position in millimeters (mm). The measurement of camera position for each of the scans (**520**, **530**) is a location of the camera **206B** relative to the optical device, in this case relative the active area **950** of the LOE **903.**

In step **312,** metrics are determined based on the extracted cross-sections. The cross-sections (X-cross-sections **420AH, 420BH, 420CH,** etc. and Y-cross-sections **430AV, 430BV, 430CV,** etc.) for each ROI can now be further analyzed in order to calculate and estimate a number of performance metrics. Typically, the metric is based on a location relative to the optical device (location of the captured image relative to the active area of the optical device, from which the portion of the metric is derived). In one embodiment, the full width at half maximum (FWHM) of each averaged cross-section is calculated and plotted **540** as function of facet's active area location (camera position in the active area). The growth in the width of each peak of the FWHM plot can indicate bad LOE functionality (such as jumps, defocusing and energy loss). A number of other metrics can be extracted from the data, including but not limited to mean peak width, standard deviation of peak width, first and second derivatives of peaks widths, largest peak width, max peak shift from expected location, standard deviation of peak shift, mean modulation transfer function at Nyquist frequency or any other frequency, standard deviation of transfer function at Nyquist frequency or any other frequency.

For each portion of the test pattern **200,** corresponding sets of cross-sections are compared to determine a metric for the optical device. Additional comparisons can be done, for example using the mean values of the sequence of FWHM (or other functions) for both the vertical and horizontal cross-sections.

In a further embodiment, the scanning and image capture is repeated for multiple wavelengths or multiple polarization states of the illumination (input beam **4C**) or collection (out-coupling rays **38B**). This can be achieved by introducing a tunable filter or rotating polarizer in either the illumination or collection path of the system.

Method steps **300, 302,** and **304** are optional, as configuring the test setup, projecting the test pattern, and capturing images can be done independent of the processing of the captured images. Similarly, preparation, pre-processing, and optional processing of data, such as the step **310** of averaging the cross-sections, are optional processing that can be performed

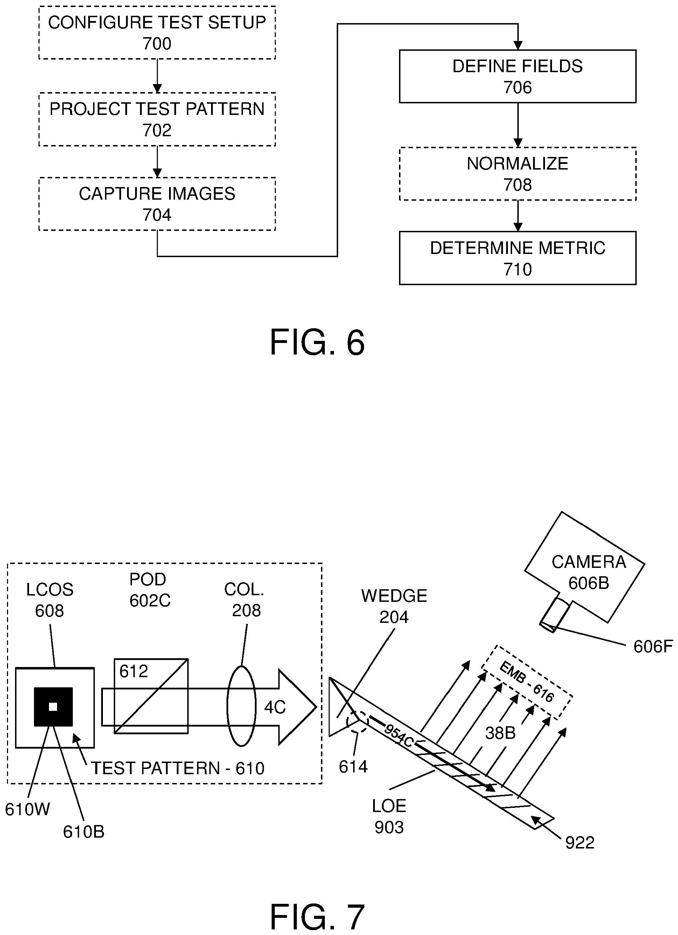

DESCRIPTION - SECOND EXAMPLE NOT FALLING UNDER THE SCOPE OF THE INVENTION - - FIG. 6 TO FIG. 11

A present embodiment is a system and method for detecting the existence and degree of "smearing" of a projected image from an optical device. In the context of this embodiment, the term "smear" or "smearing" generally refers to the generation and propagation of other than the primary light rays of an image, resulting in a projection of an image outline. The unwanted projection is to a well-defined direction or directions.

In an exemplary case where an optical device is an LOE **903,** a direction of propagation **954C** for the LOE **903** is of a collimated input image propagating via internal facets. Conventional optical devices produce a "haze" around the bright areas of an input image, that is, the smearing is substantially uniform in all directions around the bright area. In contrast, the scattering, or smearing in devices of the current embodiment, will be in a well-defined direction (for example, relative the LOE **903**). Alternatively, the smear can be thought of as being added to, or "on top of" the haze, or having aspects of haze, but with sharp boundaries. Specifically, the smearing will be in a direction parallel to the direction of propagation, or more technically in a direction perpendicular to the cemented join lines of the array of facets. The rays causing the smear are defined not by the direction of the original light (direction of light of the impute image), but by the direction of the facet cement line. The light propagating inside the LOE **903** is not always perpendicular to the facets **922.** More technically, only the rays that form a narrow horizontal line in the eye are perpendicular to the facets **922.** All other rays would have a different angle so that the user's eye **10** sees the other rays as coming from above or below the horizon. Smears are therefore in a direction perpendicular to the direction of the facet lines (or facet cement line).

To detect and define the smearing, a feature of the current embodiment is defining one or more fields in a captured image (captured from the output of the LOE **903**), each of the fields being parallel to the direction of propagation within the LOE **903.** A feature of the current embodiment is characterization of the smears (in a defined direction), in contrast to characterizing general haze of an optical system.

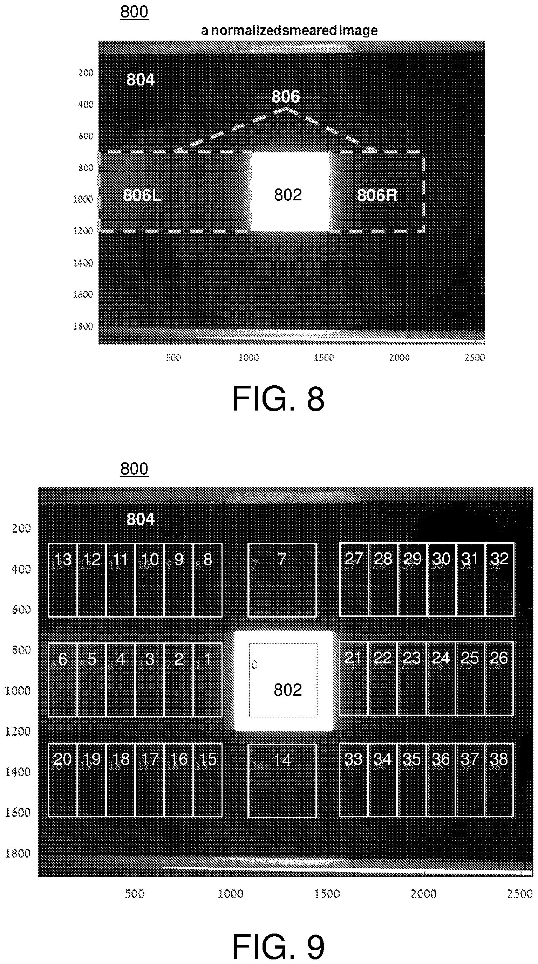

Referring to FIG. 8, there is shown a captured image **800** of output from an optical device showing a white square main image **802** on a black background **804.** Smearing **806** of the white square main image **802** can be seen primarily to the left of the main image as a left smear **806L** and also to the right of the main image as a right smear **806R.**

Referring to FIG. 6, there is shown a flowchart for optical testing of smearing. In step **700,** a test setup is configured as described in the following section.

Referring also to FIG. 7, there is shown an exemplary test setup system for the testing method of the current embodiment. The evaluation of LOE **903** transfer function uniformity (projected output) across the facet's **922** active area **950** requires a specialized test setup that injects a test signal. The current test setup uses a "POD" (micro-display projector) **602C** as the collimated light source **2C.** An exemplary test signal is a wavefront (spatial impulse function) into the LOE **903** via the entrance aperture. A light source (not shown) provides uncollimated light via a polarized beam splitter **612** to a liquid crystal on silicon (LCOS) matrix **608.** The LCOS **612** generates a test pattern **610** as reflected light that is collimated by collimator **208** to generate collimated input beam **4C.** The exemplary first test pattern **610** is a white square **610W** on a black background **610B.** The collimated input beam is coupled by exemplary wedge **204** into the LOE **903.** Other means, devices, and angles can be used to couple the collimated input beam **4C** as an input image to the LOE **903.** The input beam image is then repeatedly reflected by the facets **922** of the LOE **903** and coupled out of the LOE **903** as the out-coupled rays **38B.**

A wedge-to-LOE interface **614** is shown in a dashed circle. The wedge-to-LOE interface is an edge of a location at which the input coupling section meets the lightguide substrate **920,** in this implementation where the wedge **204** meets the LOE **903,** in the optical path. In the current figure, this interface is an edge (line) "into" the page, where the wedge **204** and LOE **903** are connected.

Lumus optical engines (OEs) (by Lumus LTD, Ness Ziona, Israel) are generally designed for a specific distance of the user's eye **10** from the LOE **903** (for example 18mm). This specific distance is referred to as the eye relief distance. An eye motion box (EMB) **616** (similar to the EMB **952**) is the region within the entire field of view (FOV) that is observed by the user's eye **10,** when the user's eye **10** is at the eye relief distance. A camera **606B** having a lens **606F** is used to capture an image of the out-coupling rays **38B.** The camera **606B** should be positioned in the EMB **616** so that the entrance pupil of the lens **606F** will be at the eye relief distance.

For simplicity in this description, a non-limiting implementation of a monochromatic camera is used. The monochromatic camera captures the intensity (brightness level) of the projected image (out-coupling rays **38B**), and will be expressed using an 8-bit scale of 0 (zero) to 255, where 0 is no light, or black, and 255 is maximum light, or all white. If a color camera is used, the brightness levels of the various colors (i.e. red, green, blue) should be taken into account.

In step **702,** a test pattern is projected. Test patterns can be created with the active LCoS dimensions. In the current embodiment, a non-limiting example of an LCOS with dimensions of 1280x720 pixels is used. In the current embodiment, three test patterns are used. In the current figure, a first test pattern **610** is a white square **610W** on a black background **610B,** also referred to as a "center square" test pattern. Two other test patterns that are used are a "white slide" or "white background" which is a uniform image with brightness level of 255 (white) and a "black slide" or "black background" which is a uniform image with brightness level of 0 (black).

Given a test pattern with light-colored and dark-colored areas, the light-colored areas are from input light of the input beam **4C,** and dark-colored areas are from the lack of input light. During propagation **954C** through the LOE **903,** the light will scatter from the light-colored area to the dark-colored area. In the current example, this scattering, or smearing, is from the white square **610W** to the black background **610B.** In other words, the white (light) scatters into the black (areas with no light). The intensity (brightness) of the input light color is significant, as opposed to the color of the light, so the use of "gray scale" or "brightness level" is used to quantify intensity of portions (fields) of the captured image **800** of the test pattern. The lighter brightness level light will scatter (smear) into the darker brightness level portions of the test pattern.

The input light of the input beam **4C** must be bright enough to get sufficient visibility of scattering. While any color light can be used, such as red, green, or blue, white is preferred as giving the best contrast as compared to areas without light (black). If two intermediate brightness levels are used (as opposed to black and white) light will scatter from each gray area to the other gray area - the brighter gray area will scatter more light to the darker gray area. Experiments for a typical, currently produced LOE **903** implementation is that the scattered light is usually <1% of the source. In this case the contrast ratio (brightness ratio in this case) between the two areas (two brightness levels) should be at least 1/100 to be able to detect a bad signal to noise ratio (SNR) between the desired image and unwanted projection (smear). In other words, the two brightness levels should have a ratio of at least 1/100 to detect smearing.

Various test patterns can be used, each providing different features.

A test pattern with high brightness in a large area has more light to scatter, but less black areas to detect smears or white stripes. Smears and white stripes will be strong compared to the input signal, but ghost images (~1% of the white intensity, regardless of the brightness) cover more of the black area (noise). Also, if the black area is small, there is less area in which to measure smears. If there are ghost images in the system, the ghost images will cover more of the FOV, as the white area is larger. The ghost images interfere with the smears and white stripes and make the measurement less accurate.

A test pattern with high brightness in a small area will result in strong smears and white stripes, and the ghost images will cover only a small area of the captured image (typically still ~1% of the white intensity).

A test pattern with a white filed that is not bright will result in less (fewer) smears and white stripes.

A test pattern that is gray will result in fewer smears and less white stripes.

A test pattern in which the black areas are actually gray (low level of input light, for example a brightness level of 39) will result in smears and white stripes not being observable, or very difficult to observe.

While various bright shapes can be used, preferably most of the area should be black to allow detection of the smears. If the black areas are not substantially black, that is, if the black area has a brightness level other than 0 (zero), the higher the brightness level, the more loss of visibility and accuracy in the measurement.

In step **704,** images are captured. In order to evaluate the LOE transfer function across the facet's active area (along both horizontal and vertical axes), a camera **606B** positioned opposite the LOE **903** captures an image of the out-coupling rays **38B** from the test pattern **610.** Preferably, the camera **606B** should be positioned at the eye relief distance so the test measurement corresponds to the EMB **616** of the user.

In the current embodiment exemplary test setup system, the following parameters will be used for simplicity and clarity of description. Depending on the specific requirements for optical testing of an optical device, based on this description one skilled in the art will be able to determine the appropriate parameters for testing.

The first test pattern **610** is a white square **610W** on a black background **610B.** A combination of the camera **606B,** lens **606F,** and mechanics (not shown) are used for positioning of the entrance pupil of the camera (entrance of the lens **606F**) at the eye relief distance and at the EMB center. The camera **606B** should have a resolution enabling sufficient sampling of single LCoS pixels, typically a resolution of two camera pixels for each LCoS pixel in each dimension).

An example is a 12mm focal length lens mounted on a monochromatic camera with a 2560X1920 array of 2.2μm square pixels, giving a total sensor size of 5.63mm by 4.22mm. This combination allows capturing of a 26.5° x 15.0° FOV (field of view) and projecting every LCoS pixel onto an area of 2.6 x 2.6 camera pixels. The edges of the FOV are not captured with this optical setup, but fields of interest are captured.

Referring to FIG. 9, there is shown the captured image **800** with fields defined. In step **706,** a method for testing an optical device starts by defining fields in an image. One or more additional fields are defined, and optionally a first field is defined. As described above, the image is captured from the output light of the optical device, the output light generated by projecting a collimated image of a test pattern into the optical device. The optical device has a configuration similar to the external surfaces and facets of the LOE 903. A direction of propagation (954C) is of the collimated image via the set of facets (922), internal to the optical device, and parallel to the first pair of external surfaces. The first field has a first brightness level, and is in a first location within the image Each of the additional fields have a associated brightness level, and is in a associated location within the image, other than the first location.

In step 708, optionally the image is normalized.

In step 710, a metric is derived, normally via a function, based on at least one of the associated brightness levels for the optical device.

Continuing the non-limiting exemplary implementation of the current embodiment, the image is the captured image **800.** The captured image **800** includes a large white square **802** that is defined as the first field **F0** in the middle of the FOV over the black background **804.** Additional fields **F1** to **F38** are defined as areas of the black background **804.** Smears can be seen to the left and right of the white square **802** and look like a gray horizontal tail on the square **802,** with clear edges. The first field **F0** has a first brightness level of substantially white (gray level 255), and is in a first location, the center, of the captured image **800.** Each of the additional fields (**F1** to **F38**) has an associated brightness level, and is in an associated location within the image, other than the first location. For example, field F1 is adjacent to the left of the white square (**802**, **F0**) and has a brightness level of "light gray". From field F1, fields F2 to F6 are adjacent and subsequent to each other in a direction toward the left edge of the captured image 800. Each of fields F2 to F6 has an associated brightness level. On the right side of the image, from field F0, fields F21 to F26 are adjacent and subsequent to each other in a direction toward the right edge of the captured image 800. The brightness level decreases from F21 being "light gray" to F26 being substantially black.

Since the smear tail is generally less than 1% of the intensity of the white square **802,** it is important to acquire the image **800** with a high dynamic range. The captured image can be represented by a matrix of gray values, designated$M_{rectangle}$, where each gray value is of a pixel of the captured image.

Typically, the captured image needs to be normalized, in particular due to the need for high dynamic range, so that the results will not depend on the LED current and the kind of LOE used, and to eliminate the influence of LOE black levels, the room illumination, and camera noise. Normalization can include the following techniques.

A collimated image is projected of a second test pattern having substantially entirely the first brightness level, in this case, an entirely white test pattern. A second captured image, a white image, is captured from the output light generated by this white test pattern from the LOE 903. Intensity is measured of the white image in the area defined as the first field F0 and averaged, resulting in a scalar intensity of the area of the white square F0, designated as a scalar $c_{white}$. Alternatively, the entire white image can be used, resulting in a matrix designated as $M_{white}$. Normalization with the white test pattern can help compensate for image brightness nonuniformity. A final image, the matrix$M_{final}$ , can be calculated as:

$$M_{final} = \frac{M_{rectangle}}{c_{white}},$$

or as

$$M_{final} = \frac{M_{rectangle}}{M_{white}},$$

where division is done pixel by pixel.

Alternatively, or additionally, a black background image is used to eliminate the influence of LOE black levels, the room illumination, and camera noise. This can be done by taking an image of a black slide. A collimated image is projected of a third test pattern having substantially entirely one of the associated brightness levels, in this case an entirely black test pattern. In other words, the projection of the third test pattern is not to project any test pattern. A third image, a black image, is captured from the output from the LOE 903. Intensity is measured of each pixel in the third captured image to produce a resulting matrix designated as black matrix$M_{black}$. Using the black matrix, the final image can be calculated as:

$$M_{final} = \frac{M_{square} - M_{black}}{c_{white} - M_{black}}$$

where the division is done pixel by pixel.

Using only the white matrix (normalizing by ignoring the black matrix / setting $M_{black}=0$ in the expression above) can be used to better estimate the eyes' response, at the cost of higher sensitivity to other image problems, and especially local contrast issues.

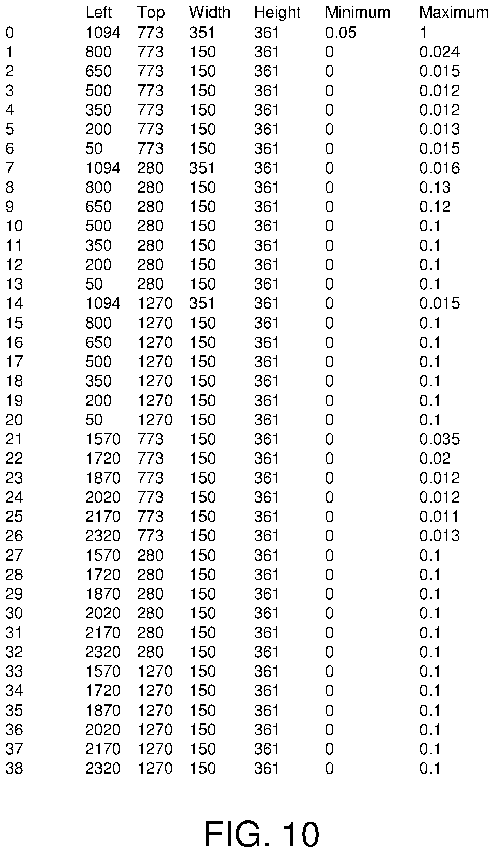

Referring also to FIG. 10, there is shown a chart of the 39 fields F0 to F38 position, size, and brightness intensity. The first column is field number, the second column is location of "Left" side of the field, the third column is location of "Top" side of the field, fourth column is "Width" of the field, fifth column is "Height" of the field, sixth column is "Minimum" intensity found in the field, and seventh column is "Maximum" intensity found in the field. As noted above, the current 39 fields are a non-limiting example, and the number, position, and size of fields can be determined based on the specific requirements of testing.

The metric can be determined using a technique such as one or more of the following.

1. Comparing at least one of the associated brightness levels to at least one previously determined brightness level. For example, the smear (brightness) in each field must be lower than the values specified in the table of FIG. 10.

2. Summing the associated brightness levels, For example, the total smear intensity defined by:

$$I_{tot} = \sum_{k=1}^{38} I_k$$

should be smaller than 3, for example.

3. Comparing a second additional field's associated brightness level to two brightness levels each of additional fields adjacent to the second additional field and opposite each other. For example, the relative smear, defined by a ratio of a smear tail to areas above and below fields of the smear tail:

$$I_{relative} = \sum_{k=1}^{6} \frac{I_k}{\frac{1}{2}I_{k+7} + \frac{1}{2}I_{k+14}} + \sum_{k=21}^{26} \frac{I_k}{\frac{1}{2}I_{k+7} + \frac{1}{2}I_{k+14}} < 2$$

.

Different criteria can be applied to test the smear pattern of different LOE types, as the appearance of smears changes with the specifics of different LOEs.

Alternative smear characterization algorithms, include, but are not limited to:

The criteria for the smear can be relative to the performance of an LOE that is considered good - instead of comparing to absolute values (for example, of FIG. 10).

Measuring the ratio of the smeared fields (for example, F1 to F6 and F21 to F26 in the above example) to the not smeared fields above and below separately, which will be more sensitive to ghost images for example, but will give a more detailed smear edge diagnosis.

Setting the criterion for the ratios of each of fields F1 to F6 and F21 to F26 with respective above and below fields separately, for higher spatial resolution at the cost of noisier outcome.

Taking the smears right and left separately, which can be used when the smear is not symmetric.

Finding the steepness of the transition from smeared to non-smeared regions using edge detection techniques, such as LOG (Laplacian of Gaussian), for example.

Measuring the change of contrast of the smeared regions compared to a black image by taking for the image analysis

$$M_{final} = \frac{M_{square}}{M_{black}}$$

Measuring the contrast uniformity of the smeared image, with or without the normalization and image enhancement techniques mentioned above, using statistical tools such as variance of the image or contrast image, change in average luminance or changes in the brightness level histogram shape and median.

The smear tail can be fitted to a declining function, and decline parameter can be extracted. Fast decline indicates a weak smear, and slow decline indicates a long smear tail.

Other test patterns can be sensitive to different kind of smears. The test image can be placed closer to the edges of the FOV to see a longer smear tail inside the measured FOV, the test images can be larger or smaller in horizontal and vertical directions where larger white area improve the SNR (signal to noise ratio) at the cost of adding ghost images and reducing the smeared area.

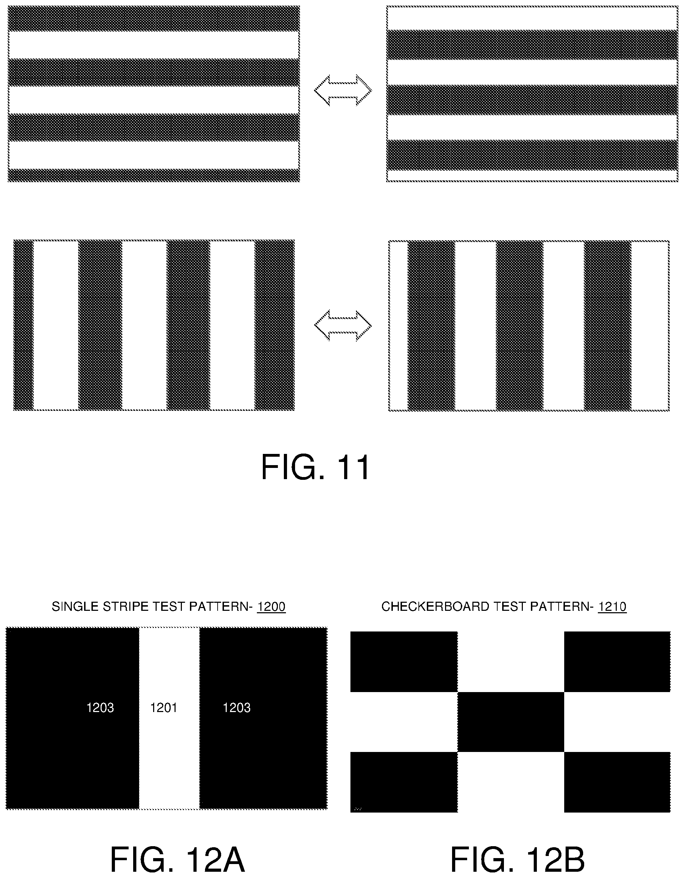

Referring to FIG. 11, there is shown alternative patterns. A checkerboard-like or stripes-like contrast measurement can be used. In these cases, functions used to generate metrics such as measuring sequentially images pairs. This enables separation of smears in each direction, so both an absolute smear value can be extracted as the sequential contrast, and a relative value from the ratio or difference of the contrast of the vertical and horizontal patterns. This technique is sensitive to ghost images.

Measuring in different parts of the EMB **616** can give more data on the smears, as the smear test is position sensitive. As noted above, in the current exemplary implementation, the captured image **800** is captured is by a camera (**606B**) at a first of a plurality of capture locations. Capture locations are typically at the eye relief distance from the LOE (**903**) and in the EMB **616** of the LOE **903**. The capturing can be repeated at one or more capture locations other than the first capture location, and one or more additional metrics can be derived based on the capture locations. Each capture location typically will result in one or more final images that can be processed to derive one or more metrics. The metrics can be used individually or in relation to each other to derive other metrics.

As the smears are produced as the input image propagates (in the propagation direction **954C**) through the facets **922** of the LOE **903,** an (output) image captured close to the proximal end **954A** will have little or no smearing compared to an image captured close to the distal end **954B** which will have maximum smearing.

DESCRIPTION - THIRD EXAMPLE - NOT FALLING UNDER THE SCOPE OF THE INVENTION - FIG. 12A TO FIG. 19

A present embodiment is a system and method for detecting the existence and degree of a "white stripes" (WS) phenomenon related to scattering and diffraction in the wedge-to-LOE interface **614.** This WS scattering and diffraction can be valid for scattering and diffraction from an edge of a location at which the input coupling section meets the lightguide substrate, and from other edges along the optical path. The generation and propagation of other than the primary light rays of an image can result in the unwanted projection of lines (stripes) of varying brightness in a well-defined direction in relation to the direction of the wedge-to-LOE interface **614.** A typical feature of WS is that the lines are parallel to the wedge-to-LOE interface, and not to the image that is being scattered (not related to the orientation of the input image). The unwanted lines (WS) are generally too weak to influence contrast of the output image, but are seen by the human eye. For simplicity in this embodiment, "scattering and diffraction" will be referred to as "scattering".

The varying brightness of the unwanted lines is typically lighter than the background on which the lines appear, referred to in this document as "white stripes" (WS), however darker unwanted lines can be detected and analyzed using the current method. The current method can also be used to detect similar phenomena generated by configurations other than wedge-to-LOE interface parallel to the WS.

When a bright area is present somewhere in an image being expanded by the optical system, scattering (WS) appears as sets of thin white lines on a black area. This scattering is a particular problem in Lumus's OEs (optical engines, LOEs **903**) because of the lightguide technology of the LOE **903.**

This scattering phenomenon may appear in other similar structures. Unlike conventional scattering, this WS scattering results in relatively thin lines (as compared to the width of the projected image), as opposed to resulting in a blurry image. Moreover, the effect of image guiding in the LOE **903** can make the line(s) appear far from the image that is being scattered.

Referring to FIG. 12A, there is shown an exemplary single stripe test pattern **1200,** a slide containing a large white vertical rectangle **1201** in the middle of the FOV over a black background **1203.**

Referring to FIG. 12B, there is shown a checkerboard test pattern **1210,** a slide containing an alternating pattern of black and white rectangles.

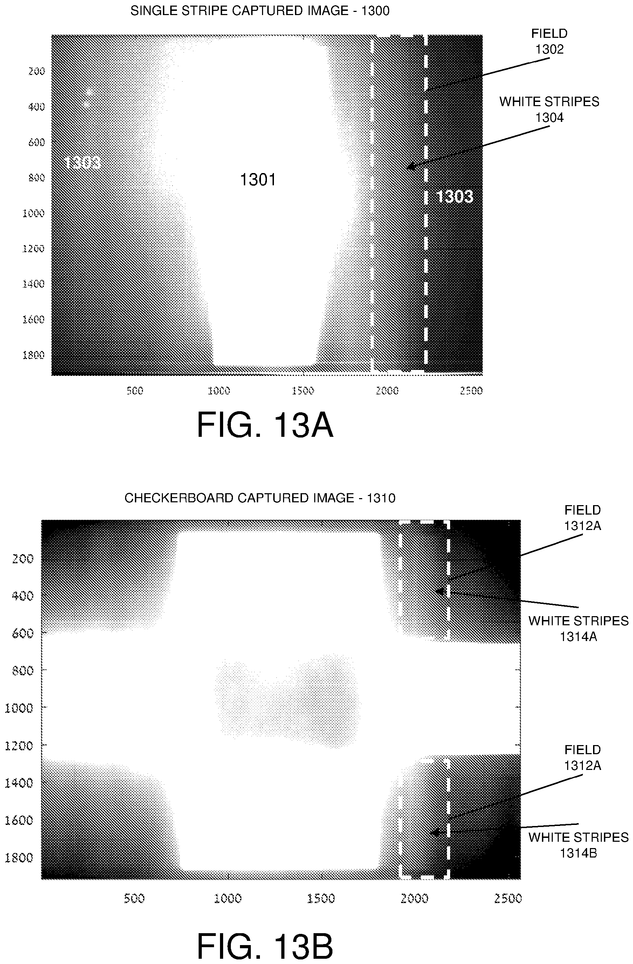

Referring to FIG. 13A, there is shown a single stripe captured image **1300.** Using an input image of the single stripe test pattern **1200,** the resulting single stripe captured image **1300** includes a white rectangular area **1301** generated from the white vertical rectangle **1201** and black areas **1303** generated from the black background **1203.** The single stripe captured image **1300** shows a field **1302** having white stripes **1304** parallel and to the right side of the white vertical rectangle **1301,** in the background **1303.** The image is saturated, to make seeing the stripes possible.

Referring to FIG. 13B, there is shown a checkerboard captured image **1310.** Using an input image of a the checkerboard test pattern **1210,** the resulting checkerboard captured image **1310** shows field **1312A** and field **1312B** having respective white stripes **1314A** and white stripes **1314B.** The white stripes (**1314A**, **1314B**) are parallel and to the right side of the white rectangles of the original checkerboard test pattern **1210.** The image is saturated, to make seeing the stripes possible.

Note that the WS in the captured images are parallel to the white rectangles due to the orientation of the input image and optical system. As noted above, the WS lines are parallel to the wedge-to-LOE interface and not dependent on the orientation of the input test pattern. In other words, if the input test patterns were rotated or moved, the captured images would have rotated white rectangles, but the white stripes would remain in the same orientation as shown, but with a different brightness. In other words, the intensity of the WS changes, but not position. For different systems being tested (for example, different LOEs **903**) a different number and shapes of lines may result.

For WS testing, the FIG. 6 flowchart for optical testing and FIG. 7 test setup can be used, as described above for smear testing. Since the white stripes are generally less than 0.5% of the intensity of the white rectangle, acquiring the captured image with a high dynamic range is important. Additionally, as will be described below, in the case of WS testing, the optional step **708** of normalizing the image is typically required. Testing has shown that for a typical LOE **903** the WS are often not seen from the first facet (922), so the position of the camera 606B may be important to collect a good captured image for testing.

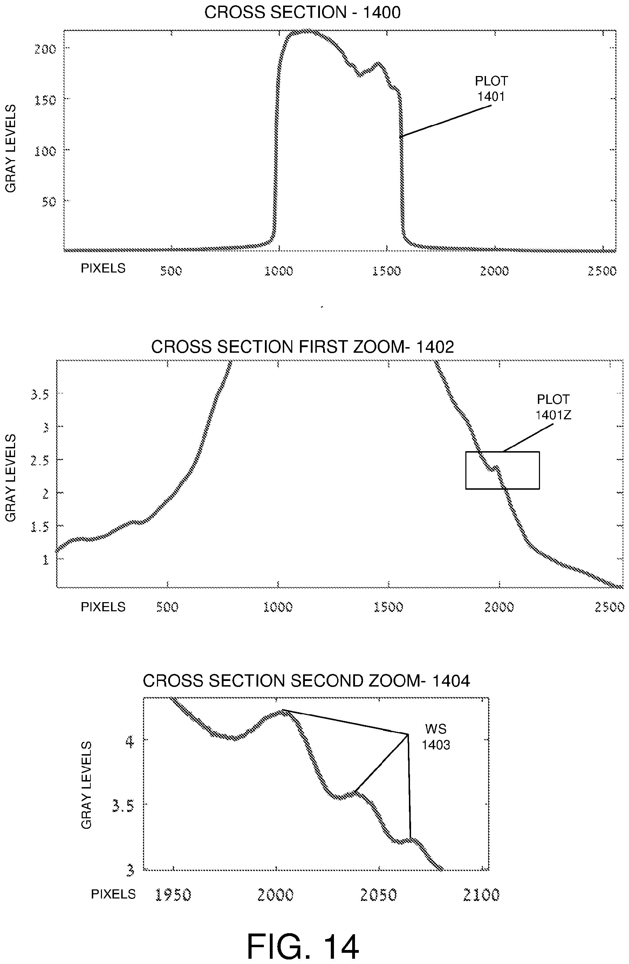

Referring to FIG. 14, there is shown a cross-section **1400** plot that could be generated from the single stripe captured image **1300.** This exemplary image is 1920 pixels high by 2520 pixels wide. The horizontal axis is pixels across the image width, 2520 pixels. The vertical axis is averaged gray levels (0 to 255) from each row of the image height, 1920 pixels. Thus, the current figure shows a plot **1401** of the brightness as a function of position across the width of the image. White stripes are not obvious at this level of detail.

A cross-section first zoom **1402** plot zooms in on a right slope of the plot **1401,** showing only about 4 gray levels (0.5 to 4) as plot area **1401Z.** At this level of detail, white stripes are roughly visible.

A cross-section second zoom **1404** plot of the plot area **1401Z** shows only about 1 gray level (3 to 4.5) and the difference in brightness of the white stripes (WS **1403**) can be seen, as compared to the slope of brightness of the white rectangular area **1301**.

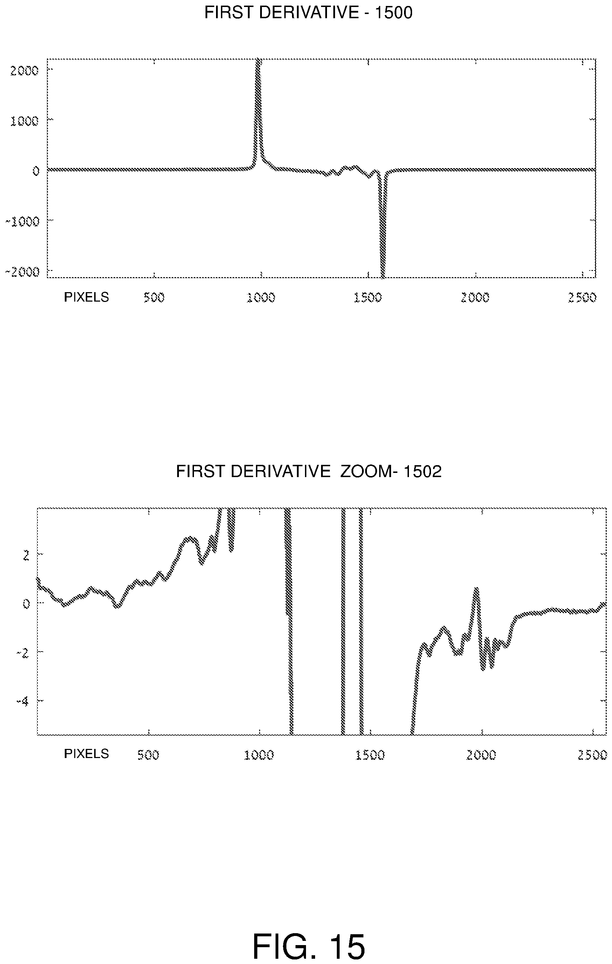

Referring to FIG. 15, there is shown a plot of a first derivative of the brightness. Taking a first derivative of the cross-section **1400** plot results in a first derivative **1500** plot, with the horizontal axis maintained as pixels of the captured image width, and a vertical axis of brightness difference between two adjacent pixels. Changes of slope can be seen more clearly in this derivative. A first derivative zoom **1502** plot is a close up of about 10 levels on the vertical axis.

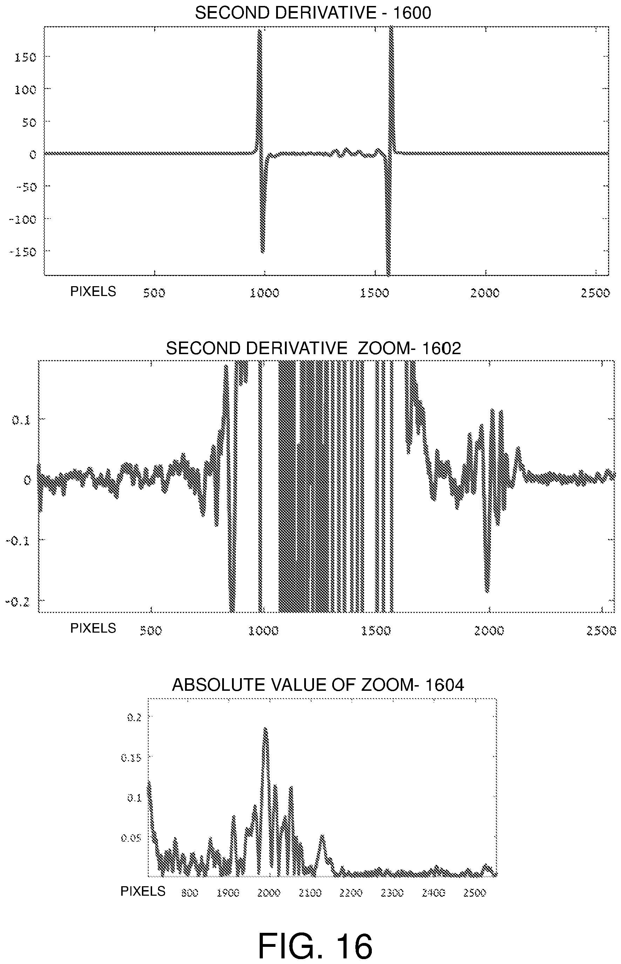

Referring to FIG. 16, there is shown a plot of a second derivative of the brightness. This second derivative is known in the art of image processing as a "Laplacian filter", normally used to recognize edges in images. In this case, the Laplacian filter is being used to detect the white stripes amidst the image brightness and noise. Taking a second derivative of the first derivative **1500** plot results in a second derivative **1600** plot, with the horizontal axis maintained as pixels of the captured image width, and a vertical axis of a two-sided intensity difference. A second derivative zoom **1602** plot is a close up of about 0.4 levels on the vertical axis. Taking the absolute value of the second derivative zoom **1602** plot results in an absolute value of zoom **1604** plot. The maximum absolute value can be used as a grade for the captured image, and hence as an indication of quality of the LOE **903**.

The following exemplary implementation uses the single stripe test pattern **1200** with the test setup as described in reference to FIG. 7 and the single stripe captured image **1300**. The captured image can be provided by projecting a collimated image **4C** of the single stripe test pattern **1200** into the optical system, the optical system being a lightguide optical element (LOE, **903**) and capturing an image projected **38B** by the output light from the LOE **903** to provide the captured image **1300**.

Typically, the capturing is by the camera **606B** at a first of a plurality of capture locations, the capture locations at an eye relief distance from the LOE **903** and in the EMB **616** of the LOE **903**. Optionally, the capturing is repeated at one or more of the capture locations, other than the first capture location, to provide additional captured images. One or more additional metrics can be derived based on the (captured images at the) capture locations.

A general method for testing for WS begins by defining, in a captured image **1300**, one or more fields **1302**. Each of the one or more fields **1302** is in an associated location within the captured image **1300**, the associated location being parallel to the coupling interface **614**. At least one metric is derived based on at least one of the fields **1302**.

The test pattern **1200** includes a first area having a first brightness level greater than a background brightness level of a background area. The background area is an area of the test pattern other than the first area. In a typical implementation, the first area is white (white vertical rectangle **1201**), the background area is black (black background **1203**) surrounding the first area, and the one or more fields are defined in the captured image background area (field **1302** in background **1303**). As noted above, since the white stripes are generally less than 0.5% of the intensity of the white rectangle, the first brightness level is preferably at least substantially 200 times brighter than the background brightness level.

Normalization is an important, if not critical step in the detection method. The image intensity needs to be normalized, so that the results will not depend on the LED current and the kind of optical device (LOE) used. Normalization is typically done prior to the step of deriving, normalizing intensity (brightness) of the captured image 1300.

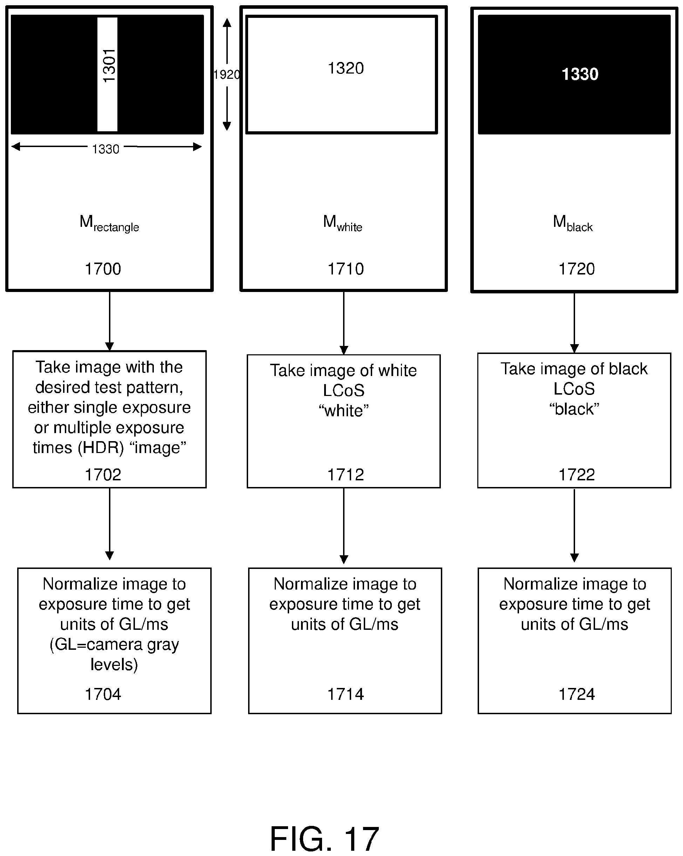

Referring to FIG. 17, there are shown several exemplary test patterns. In block **1700**, the captured image **1300** (of test pattern **1200**) is shown 1920 pixels high by 2520 pixels wide, with the white rectangular area **1301** (1920 pixels high). The captured image **1300** is represented as a matrix of brightness of pixels, $M_{rectangle}$. In block **1702**, as described above, the image is acquired from the test pattern **1200**. Acquisition can be from a single exposure, for example with a sufficiently high definition camera, or from multiple exposures and image processing to produce an image of sufficiently high dynamic range. In block **1704**, the captured image matrix $M_{rectangle}$ is normalized to exposure time to get units of grey levels (GL) per millisecond (ms).

In block **1710**, an all-white test pattern is used to generate an all-white captured image **1320**, represented by an all-white matrix of brightness of pixels, $M_{white}$. In block **1712**, the all-white captured image **1320** can be acquired from an output image generated by a white LCOS. In block **1714**, the all-white matrix $M_{white}$ is normalized to exposure time to get units of GL/ms.

In block **1720**, similar to the all-white captured image, an all-black test pattern is used to generate an all-black captured image **1330**, represented by an all-black matrix of brightness of pixels, $M_{black}$. In block **1722**, the all-black captured image **1330** can be acquired from an output image generated by a black LCOS. In block **1724**, the all-black matrix $M_{white}$ is normalized to exposure time to get units of GL/ms.

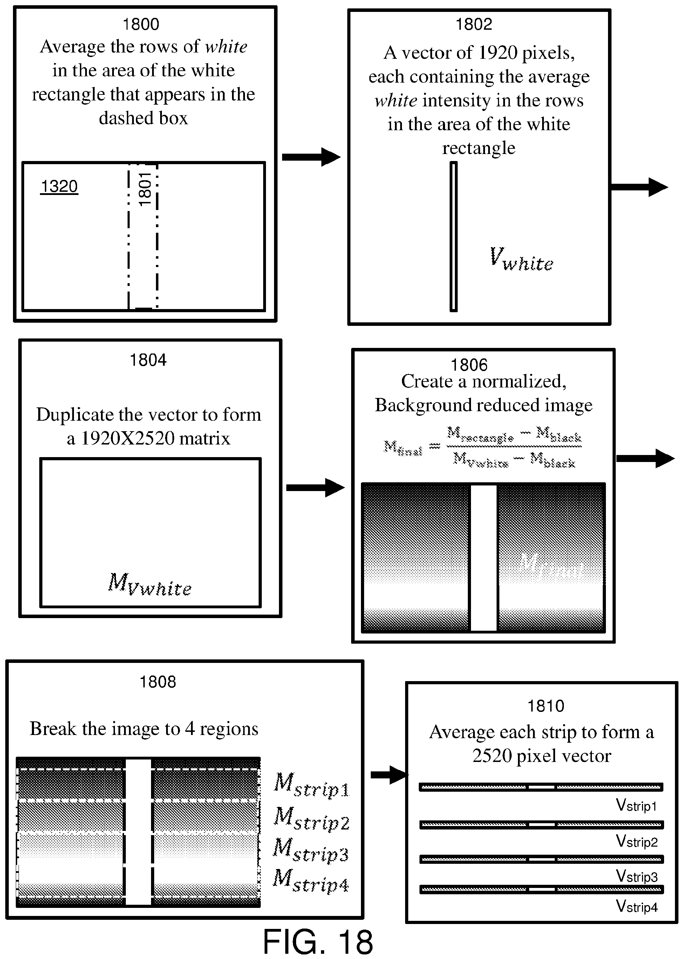

Referring to FIG. 18, there is shown an exemplary process for normalizing the captured image matrix $M_{rectangle}$. In block **1800** the all-white captured image **1320** has a white rectangle **1801** designated. The area of the white rectangle **1801** corresponds to the white rectangular area **1301**, is 900 pixels wide, and 1920 pixels high. The white rectangle **1801** is divided into rows (1920 rows) and in each of the 1920 rows the brightness of the 900 pixels is averaged.

In block **1802**, this averaging results in an all-white vector $V_{white}$ that is 1 pixel wide (by definition) and 1920 pixels high.

In block **1804,** to be used as normalization for M$_{rectangle}$, the all-white vector needs to be replicated to form an all-white vector matrix (M$_{Vwhite}$) of the same size as M$_{rectangle}$, so that all columns of the all-white vector matrix (M$_{Vwhite}$) are the all-white vector V$_{white}$.

In block **1806,** in order to eliminate the influence of LOE black levels, the room illumination, camera noise, etc., the all-black matrix *M$_{black}$* is subtracted from each of the captured image matrix (*M$_{rectangle}$*) and the all-white vector matrix (M$_{Vwhite}$) by:

$$M_{final} = \frac{M_{rectangle} - M_{black}}{M_{Vwhite} - M_{black}} .$$

The division is done pixel by pixel resulting in a final matrix (M$_{final}$) to be used for further processing and deriving metrics.

Experience has shown that the actual intensity of the white stripes does not determine the degree of visibility to the viewer's eye, so the evaluation is done according to the sharpness of the stripes. The degree of sharpness can be measured using an edge detection algorithm, for example, "Laplacian of Gaussian", a standard image processing technique used here for detecting WS.

In block **1808,** continuing the current exemplary implementation, one method for detecting WS is to first split the captured and normalized final matrix (M$_{final}$) into to four strips The strips are horizontal portions of the final matrix, designated as M$_{strip1}$, M$_{strip2}$, M$_{strip3}$, and M$_{strip4}$. This splitting decreases the sensitivity of the measurement to tilts of the camera sensor **606B** and of the LCoS display **608** for example, relative to the scattering edge or interface **614.** Each strip is a matrix of 400 by 2520 camera pixels in the suggested measurement configuration above.

In block **1810,** the columns of each strip are averaged to form four respective 2520 element strip vectors, V$_{strip1}$, V$_{strip2}$, V$_{strip3}$, V$_{strip4}$. While four strips are used in the current example, this is not limiting, and other numbers and various widths (heights) of strips can be used.

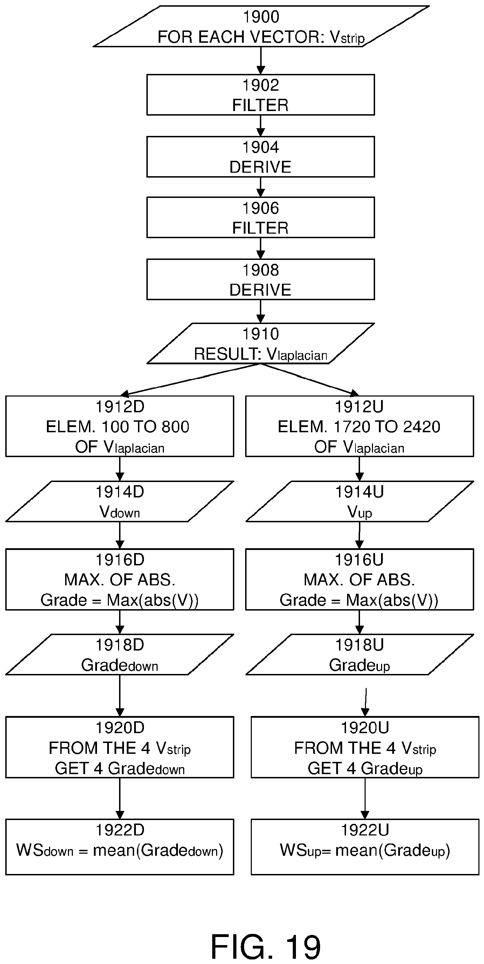

Referring to FIG. 19 there is shown a flowchart of an exemplary processing method for detecting WS. In block **1900,** for each strip vector (V$_{strip}$) the strip vector is filtered **1902,** a derivation taken **1904,** optionally filtered again **1906,** and a second derivation taken **1908** to produce **1910** four, 2518 long Laplacian vectors (V$_{laplacian1}$, V$_{laplacian2}$, V$_{laplacian3}$, and V$_{laplacian4}$) one Laplacian vector for each respective strip vector. The derivation **1904** and second derivation **1908** are similar as described above with respect to FIG. 14, FIG. 15, and FIG. 16. The addition of filtering (**1902, 1906**) smoothes (filters) the data to remove noise in frequencies higher than the white stripes. In the current example, a 2$^{nd}$ order Savitzky Golay filter with a range of 10 pixels (corresponding to approximately 4 LCoS pixels) is used. The use of this filter is not limiting, and any filter with similar range can be used (Gaussian etc.). In the current example, each filtered vector is derived numerically (subtraction of nearest neighbors).

A metric for the existence and extent of the WS is also referred to in the context of this document as a "grade" of the WS. The white stripe grade is preferably given separately for the right and left sides of the captured image. The white stripes appearing in the nasal direction of the FOV (the nasal side of the LOE) are termed "stripes down" and the stripes appearing in the temple direction (the direction of the POD) are termed "stripes up".

In general, a single path (for example blocks **1912D** to **1922D**) can be used for every segment, regardless of the number of segments. The segmentation of each Laplacian vector can be from one segment to as many segments as the number of rows. In the current figure, only two out of the four Laplacian vectors (V$_{laplacian}$) are described in the parallel paths (blocks **1912D** to **1922D** and blocks **1912U** to **1922U**). In the current example, for each Laplacian vector (V$_{laplacian}$), the "down" (stripes down) grade (block **1918D**) is the maximum of pixels 100 to 800 (blocks **1912D, 1914D, 1916D**) and the "up" (stripes up) grade (block **1918U**) is the maximum of pixels 1720 to 2420 (block **1912U, 1914U, 1916U**). From the four average "down" and "up" grades (blocks **1920D, 1920U**) of the four V$_{laplacian}$ vectors, final "down" and "up" grades (blocks **1922D, 1922U**) can be derived

This averaging can be used as a criterion for determining if the performance of the LOE **903** is sufficient for use (passing the test), or if the LOE **903** is not suitable for an intended use. One exemplary criterion for passing is "up" and "down" grades < 3e-6.

Alternatively, or in addition to the above example implementation, other approaches can be used to measure WS, for example:

Different location size and location of the test pattern,

Different image sectioning,

Different image enhancement techniques,

Different edge detection techniques,

Checkerboard contrast variation, and

Techniques used for "smear" detection can also be applied to test for WS.

Metrics can be derived using a variety of techniques, including:

A table of values - comparing brightness levels within the one or more fields to at least one previously determined brightness level,

Total intensity - summing brightness levels within the one or more fields, and

Comparison - comparing a first brightness level to at least one other brightness level within the one or more fields.

Based on the current description, one skilled in the art will be able to implement one or more approaches to testing of optical scattering from interfaces, in particular to measuring the scattering and diffracting of optical elements resulting in lines, such as white stripes.

The resulting metric or metrics can be used as a figure (figures) of merit to evaluate the optical device, such as the LOE **903.** The metric can be used for quality control to determine if projected output of the LOE **903** is acceptable or outside the desired range of performance. Evaluation can include if the metrics are above or below given values, inside or outside a given range, or relative to an absolute or variable value. Evaluation can include disposition of the device, for example if the LOE **903** passes, fails, or at what level of operation. Various levels of operation may be used (or for example sold) for various applications requiring (only) a certain level of operation quality and/or performance.

Metrics can also be used for process control - feeding the resulting metrics back into the manufacturing and design processes to improve design and manufacturing of the optical devices.

Note that a variety of implementations for modules and processing are possible, depending on the application. Modules are preferably implemented in software, but can also be implemented in hardware and firmware, on a single processor or distributed processors, at one or more locations. The above-described module functions can be combined and implemented as fewer modules or separated into sub-functions and implemented as a larger number of modules. Based on the above description, one skilled in the art will be able to design an implementation for a specific application.

Note that the above-described examples, numbers used, and exemplary calculations are to assist in the description of this embodiment. Inadvertent typographical errors, mathematical errors, and/or the use of simplified calculations do not detract from the utility and basic advantages of the invention.

It will be appreciated that the above descriptions are intended only to serve as examples, and that many other embodiments are possible within the scope of the present invention as defined in the appended claims.

**Claims**

1. A method for testing an optical device, the method comprising the steps of:

(a) capturing an image at a first of a plurality of capture locations, said plurality of capture locations at an eye relief (ER) (**956**) distance from a lightguide of the optical device and in an eye motion box (EMB) (**952**) of said lightguide, said lightguide having:

(i) a first pair of external surfaces (**926**, **926A**) parallel to each other for guiding light by internal reflection,
(ii) a coupling-in configuration (**204**) for coupling an input image into said lightguide, and
(iii) a coupling-out configuration for coupling said input image out of said lightguide as an output image, so as to be viewable by an eye of a user (**10**) at said eye relief (**956**) distance and viewable across an area referred to as said eye motion box (**952**),

(b) repeating said capturing an image at one or more additional locations of said plurality of capture locations, other than said first capture location, and
(c) deriving one or more metrics based on captured images from said first capture location and at least one of said additional capture locations
(d) defining at least one region of interest (ROI, **400A, 400B**) in each of a plurality of said captured images (**410**),

(i) each said captured image (**410A**):

(A) including a test pattern (**200**),
(B) captured from the output light of the optical device, said output light generated by projecting a collimated image of said test pattern into the optical device, and
(C) captured at a different location within an active area of the optical device, relative to the optical device, said active area used by a user for viewing said output light,

(ii) each region of interest including a portion of said test pattern,

(e) extracting a plurality of cross-sections (**420A, 430A**) from each of said at least one region of interest (**400A, 400B**), wherein each (**420AH1**, ..., **420AV1**, ...) of said plurality of cross-sections includes an area (**420AH**IA, ..., **420AV**1A, ...) of said portion of said test pattern, thereby forming a corresponding set of cross-sections for each region of interest for each portion of said test pattern, and
(f) for each portion of said test pattern, comparing said corresponding sets of cross-sections to determine a metric for the optical device,

**characterized in that** said test pattern is a cross-hair, said at least one region of interest includes a first region of interest orthogonal to a second region of interest, wherein said first region of interest is of a vertical portion of said cross-hair and said second region of interest is of a horizontal portion of said cross-hair.

**2.** The method of claim 1 further including:

(a) projecting a collimated image (**4C**) of a test pattern (**610**) into said lightguide via said coupling-in configuration, said lightguide including:

(i) at least one set of facets, each of said sets:

(A) including a plurality of partially reflecting facets (**922**) parallel to each other,
(B) between said first pair of external surfaces (**926**, **926A**), and
(C) at an oblique angle relative to said first pair of external surfaces (**922**), and

(b) said capturing an image being of an image projected (**38B**) from said lightguide.

**Patentansprüche**

**1.** Verfahren zum Testen eines optischen Geräts, wobei das Verfahren die folgenden Schritte umfasst:

(a) Erfassen eines Bildes an einer ersten von mehreren Erfassungsstellen, wobei sich die mehreren Erfassungsstellen in einem Augenabstand (ER) (**956**) von einem Lichtleiter des optischen Geräts und in einer Augenbewegungsbox (EMB) (**952**) des Lichtleiters befinden, wobei der Lichtleiter Folgendes aufweist:

(i) ein erstes Paar zueinander paralleler Außenflächen (**926**, **926A**) zum Leiten von Licht durch interne Reflexion,
(ii) eine Einkopplungskonfiguration (**204**) zum Einkoppeln eines Eingangsbildes in den Lichtleiter, und
(iii) eine Auskoppelkonfiguration zum Auskoppeln des Eingangsbildes aus dem Lichtleiter als ein Ausgangsbild, so dass es von einem Auge eines Benutzers (**10**) in dem Augenabstand (**956**) betrachtet werden kann und über einen Bereich betrachtet werden kann, der als Augenbewegungsbox (**952**) bezeichnet wird,

(b) Wiederholen des Erfassens eines Bildes an einem oder mehreren zusätzlichen Orten der Vielzahl von Erfassungsorten, die sich von dem ersten Erfassungsort unterscheiden, und
(c) Ableiten einer oder mehrerer Metriken auf der Grundlage von erfassten Bildern von der ersten Erfassungsstelle und mindestens einer der zusätzlichen Erfassungsstellen
(d) Definieren mindestens eines betrachteten Bereichs (ROI, **400A, 400B**) in jedem aus einer Vielzahl der erfassten Bilder (**410**),

(i) jedes der erfassten Bilder (**410A**):

(A) enthält ein Testmuster (**200**),

(B) wurde von dem Ausgangslicht des optischen Geräts erfasst, wobei das Ausgangslicht durch Projizieren eines kollimierten Bildes des Testmusters in das optische Gerät erzeugt wird, und

(C) wurde an einer anderen Stelle innerhalb eines aktiven Bereichs des optischen Geräts erfasst, relativ zu dem optischen Gerät, wobei der aktive Bereich von einem Benutzer zum Betrachten des Ausgangslichts verwendet wird,

(ii) jeder betrachteter Bereich enthält einen Teil des Testmusters,

(e) Extrahieren einer Vielzahl von Querschnitten (**420A**, **430A**) aus jedem der mindestens einen betrachteten Bereiche (**400A**, **400B**), wobei jeder (**420AH**1, ..., **420AV**1**,** ...) der Vielzahl von Querschnitten eine Fläche (**420AH**1A, ..., **420AV**1A, ...) des Abschnitts des Testmusters umfasst, wodurch ein entsprechender Satz von Querschnitten für jeden betrachteten Bereich für jeden Abschnitt des Testmusters gebildet wird, und

(f) Vergleichen der entsprechenden Sätze von Querschnitten, für jeden Abschnitt des Testmusters, um eine Metrik für das optische Gerät zu bestimmen,

**dadurch gekennzeichnet, dass** das Testmuster ein Fadenkreuz ist, wobei der mindestens eine betrachtete Bereich einen ersten betrachteten Bereich orthogonal zu einem zweiten betrachteten Bereich umfasst, wobei der erste betrachtete Bereich ein vertikaler Teil des Fadenkreuzes ist und der zweite betrachtete Bereich ein horizontaler Teil des Fadenkreuzes ist.

2.  Das Verfahren nach Anspruch 1 umfasst ferner:

(a) Projizieren eines kollimierten Bildes (**4C**) eines Testmusters (**610**) in den Lichtleiter über die Einkopplungskonfiguration, wobei der Lichtleiter Folgendes umfasst:

(i) mindestens einen Satz von Facetten, wobei jeder der Sätze:

(A) eine Vielzahl von teilweise reflektierenden Facetten (**922**) parallel zueinander enthält,

(B) zwischen dem ersten Paar von Außenflächen (**926**, **926A**), und

(C) in einem schrägen Winkel relativ zu dem ersten Paar von Außenflächen (**922**), und

(b) wobei das Erfassen eines Bildes aus einem Bild besteht, das von dem Lichtleiter projiziert wird (**38B**).

## Revendications

1.  Procédé de test d'un dispositif optique, le procédé comprenant les étapes :

(a) de capture d'une image au niveau d'un premier d'une pluralité d'emplacements de capture, ladite pluralité d'emplacements de capture à une distance de dégagement oculaire (ER) (**956**) d'un guide de lumière du dispositif optique et dans une boîte de mouvement oculaire (EMB) (**952**) dudit guide de lumière, ledit guide de lumière ayant :

(i) une première paire de surfaces externes (**926, 926A**) parallèles l'une à l'autre pour guider la lumière par réflexion interne,

(ii) une configuration d'entrée de couplage (**204**) pour coupler une image d'entrée dans ledit guide de lumière, et

(iii) une configuration de sortie de couplage pour coupler ladite image d'entrée hors dudit guide de lumière en tant qu'image de sortie, de manière à être visible par un œil d'un utilisateur (**10**) à ladite distance de dégagement oculaire (**956**) et visible à travers une zone désignée ladite boîte de mouvement oculaire (**952**),

(b) de répétition de ladite capture d'une image au niveau d'un ou de plusieurs emplacements supplémentaires de ladite pluralité d'emplacements de capture, autres que ledit premier emplacement de capture, et

(c) de dérivation d'une ou de plusieurs mesures sur la base d'images capturées à partir dudit premier emplacement de capture et d'au moins un desdits emplacements de capture supplémentaires

(d) de définition d'au moins une région d'intérêt (ROI, **400A, 400B**) dans chacune d'une pluralité desdites images capturées (**410**),

(i) chacune desdites images capturées **(410A)** :

(A) comportant un motif (**200**),
(B) étant capturée à partir de la lumière de sortie du dispositif optique, ladite lumière de sortie étant générée en projetant une image collimatée dudit motif de test dans le dispositif optique, et
(C) étant capturée au niveau d'un emplacement différent dans une zone active du dispositif optique, par rapport au dispositif optique, ladite zone active étant utilisée par un utilisateur pour visualiser ladite lumière de sortie,

(ii) chaque région d'intérêt comportant une partie dudit motif de test,

(e) d'extraction d'une pluralité de coupes transversales (**420A**, **430A**) de chacune de ladite au moins une région d'intérêt (**400A**, **400B**), dans lequel chacune (**420AH**1, ..., **420AV**1, ...) de ladite pluralité de coupes transversales comporte une zone (**420AH**1A, ..., **420AV**1A, ...) de ladite partie dudit motif de test, formant ainsi un ensemble correspondant de coupes transversales pour chaque région d'intérêt pour chaque partie dudit motif de test, et

(f) pour chaque partie dudit motif de test, de comparaison desdits ensembles correspondants de coupes transversales pour déterminer une mesure pour le dispositif optique,

**caractérisé en ce que** ledit motif de test est un réticule, ladite au moins une région d'intérêt comporte une première région d'intérêt orthogonale à une seconde région d'intérêt, dans lequel ladite première région d'intérêt est d'une partie verticale dudit réticule et ladite seconde région d'intérêt est d'une partie horizontale dudit réticule.

2. Procédé selon la revendication 1 comportant en outre :

(a) la projection d'une image collimatée (**4C**) d'un motif (**610**) dans ledit guide de lumière via ladite configuration d'entrée de couplage, ledit guide de lumière comportant :

(i) au moins un ensemble de facettes, chacun desdits ensembles :

(A) comportant une pluralité de facettes partiellement réfléchissantes (**922**) parallèles les unes aux autres,
(B) entre ladite première paire de surfaces externes (**926**, **926A**), et
(C) au niveau d'un angle oblique par rapport à ladite première paire de surfaces externes (**922**), et

(b) ladite capture d'une image étant d'une image projetée (**38B**) depuis ledit guide de lumière.

FIG. 1

FIG. 2

## FIG. 3A

## FIG.3B

FIG.4A

FIG. 4C

FIG. 4B

FIG. 5

```
┌──────────────────────────┐          ┌──────────────────────────┐
│  CONFIGURE TEST SETUP    │          │      DEFINE FIELDS       │
│          700             │          │          706             │
└──────────────────────────┘          └──────────────────────────┘
             │                                      │
             ▼                                      ▼
┌──────────────────────────┐          ┌──────────────────────────┐
│   PROJECT TEST PATTERN   │          │        NORMALIZE         │
│          702             │          │          708             │
└──────────────────────────┘          └──────────────────────────┘
             │                                      │
             ▼                                      ▼
┌──────────────────────────┐          ┌──────────────────────────┐
│     CAPTURE IMAGES       │          │     DETERMINE METRIC     │
│          704             │          │          710             │
└──────────────────────────┘          └──────────────────────────┘
```

# FIG. 6

# FIG. 7

800

a normalized smeared image

FIG. 8

800

FIG. 9

|    | Left | Top  | Width | Height | Minimum | Maximum |
|----|------|------|-------|--------|---------|---------|
| 0  | 1094 | 773  | 351   | 361    | 0.05    | 1       |
| 1  | 800  | 773  | 150   | 361    | 0       | 0.024   |
| 2  | 650  | 773  | 150   | 361    | 0       | 0.015   |
| 3  | 500  | 773  | 150   | 361    | 0       | 0.012   |
| 4  | 350  | 773  | 150   | 361    | 0       | 0.012   |
| 5  | 200  | 773  | 150   | 361    | 0       | 0.013   |
| 6  | 50   | 773  | 150   | 361    | 0       | 0.015   |
| 7  | 1094 | 280  | 351   | 361    | 0       | 0.016   |
| 8  | 800  | 280  | 150   | 361    | 0       | 0.13    |
| 9  | 650  | 280  | 150   | 361    | 0       | 0.12    |
| 10 | 500  | 280  | 150   | 361    | 0       | 0.1     |
| 11 | 350  | 280  | 150   | 361    | 0       | 0.1     |
| 12 | 200  | 280  | 150   | 361    | 0       | 0.1     |
| 13 | 50   | 280  | 150   | 361    | 0       | 0.1     |
| 14 | 1094 | 1270 | 351   | 361    | 0       | 0.015   |
| 15 | 800  | 1270 | 150   | 361    | 0       | 0.1     |
| 16 | 650  | 1270 | 150   | 361    | 0       | 0.1     |
| 17 | 500  | 1270 | 150   | 361    | 0       | 0.1     |
| 18 | 350  | 1270 | 150   | 361    | 0       | 0.1     |
| 19 | 200  | 1270 | 150   | 361    | 0       | 0.1     |
| 20 | 50   | 1270 | 150   | 361    | 0       | 0.1     |
| 21 | 1570 | 773  | 150   | 361    | 0       | 0.035   |
| 22 | 1720 | 773  | 150   | 361    | 0       | 0.02    |
| 23 | 1870 | 773  | 150   | 361    | 0       | 0.012   |
| 24 | 2020 | 773  | 150   | 361    | 0       | 0.012   |
| 25 | 2170 | 773  | 150   | 361    | 0       | 0.011   |
| 26 | 2320 | 773  | 150   | 361    | 0       | 0.013   |
| 27 | 1570 | 280  | 150   | 361    | 0       | 0.1     |
| 28 | 1720 | 280  | 150   | 361    | 0       | 0.1     |
| 29 | 1870 | 280  | 150   | 361    | 0       | 0.1     |
| 30 | 2020 | 280  | 150   | 361    | 0       | 0.1     |
| 31 | 2170 | 280  | 150   | 361    | 0       | 0.1     |
| 32 | 2320 | 280  | 150   | 361    | 0       | 0.1     |
| 33 | 1570 | 1270 | 150   | 361    | 0       | 0.1     |
| 34 | 1720 | 1270 | 150   | 361    | 0       | 0.1     |
| 35 | 1870 | 1270 | 150   | 361    | 0       | 0.1     |
| 36 | 2020 | 1270 | 150   | 361    | 0       | 0.1     |
| 37 | 2170 | 1270 | 150   | 361    | 0       | 0.1     |
| 38 | 2320 | 1270 | 150   | 361    | 0       | 0.1     |

## FIG. 10

FIG. 11

SINGLE STRIPE TEST PATTERN- 1200

CHECKERBOARD TEST PATTERN- 1210

FIG. 12A

FIG. 12B

SINGLE STRIPE CAPTURED IMAGE - 1300

FIELD
1302

WHITE STRIPES
1304

FIG. 13A

CHECKERBOARD CAPTURED IMAGE - 1310

FIELD
1312A

WHITE STRIPES
1314A

FIELD
1312A

WHITE STRIPES
1314B

FIG. 13B

CROSS SECTION - 1400

CROSS SECTION FIRST ZOOM- 1402

CROSS SECTION SECOND ZOOM- 1404

FIG. 14

FIRST DERIVATIVE - 1500

FIRST DERIVATIVE ZOOM- 1502

FIG. 15

SECOND DERIVATIVE - 1600

SECOND DERIVATIVE ZOOM- 1602

ABSOLUTE VALUE OF ZOOM- 1604

FIG. 16

| 1301 ↕1920 | 1320 | **1330** |
|---|---|---|
| ↔ 1330 | | |
| M<sub>rectangle</sub> | M<sub>white</sub> | M<sub>black</sub> |
| 1700 | 1710 | 1720 |

| Take image with the desired test pattern, either single exposure or multiple exposure times (HDR) "image" 1702 | Take image of white LCoS "white" 1712 | Take image of black LCoS "black" 1722 |
|---|---|---|

| Normalize image to exposure time to get units of GL/ms (GL=camera gray levels) 1704 | Normalize image to exposure time to get units of GL/ms 1714 | Normalize image to exposure time to get units of GL/ms 1724 |
|---|---|---|

# FIG. 17

1800
Average the rows of *white* in the area of the white rectangle that appears in the dashed box

1320 | 1801

1802
A vector of 1920 pixels, each containing the average *white* intensity in the rows in the area of the white rectangle

$V_{white}$

1804
Duplicate the vector to form a 1920X2520 matrix

$M_{Vwhite}$

1806
Create a normalized, Background reduced image

$$M_{final} \approx \frac{M_{rectangle} - M_{black}}{M_{Vwhite} - M_{black}}$$

1808
Break the image to 4 regions

$M_{strip1}$
$M_{strip2}$
$M_{strip3}$
$M_{strip4}$

1810
Average each strip to form a 2520 pixel vector

$V_{strip1}$
$V_{strip2}$
$V_{strip3}$
$V_{strip4}$

FIG. 18

**FIG. 19**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IL 2018050205 W